# EUROPEAN PATENT APPLICATION

(11) **EP 1 712 916 A1**
(43) Date of publication of application: **18.10.2006**
(21) Application number: 04807863.8
(22) Date of filing: 27.12.2004
(51) Int. Cl.: G01N 33/561, C12M 1/00, C12N 15/09, C12Q 1/68, G01N 27/447, G01N 33/53, G01N 37/00

(54) **BIOLOGICAL SAMPLE DISCRIMINATING DEVICE, BIOLOGICAL SAMPLE DISCRIMINATING METHOD, AND BIOLOGICAL SAMPLE DISCRIMINATING PLATE**

(30) Priority: 26.12.2003 JP 2003434073
(71) Applicant: MATSUSHITA ELECTRIC INDUSTRIAL CO., LTD., Kadoma-shi, Osaka 571-8501 (JP)
(72) Inventor: AMANO, Yoshinori, (JP); HASHIMOTO, Hideaki, (JP); NISHIDA, Takeshi, (JP); MORI, Kazuyoshi, (JP); SHIMIZU, Ryuuji, (JP); ANDOU, Hiroshi, (JP); NAKANISHI, Kenji, (JP); YANAGIHARA, Naoki, (JP); HAYASHI, Miho, (JP)
(74) Representative: Jackson, Martin Peter
(86) International application number: PCT/JP2004/019508
(87) International publication number: WO 2005/064339

(57) **Abstract**

There is provided a plate (10) on which a channel pattern (110) is formed, which channel pattern includes a first channel (116) into which a buffer agent is injected, and a second channel (117) having, in a portion thereof, a quantification part (117a) that has a portion common to the first channel and holds a predetermined amount of a biological sample, the biological sample being injected into the channel including the quantification part, and the plate (10) is rotated at a high speed by a filling unit (20) to fill the buffer agent in the first channel, and thereafter, the second channel is pressurized by a discrimination unit (30) to fill the biological sample in the second channel, and simultaneously, a predetermined amount of the biological sample is added into the buffer agent. Therefore, when performing discrimination of the biological sample, a discrimination result can be obtained accurately in a short time without the necessity of complicated preparation works.

## Description

### TECHNICAL FIELD

The present invention relates to a biological sample discrimination apparatus, a biological sample discrimination method, and a biological sample discrimination plate, for transferring a biological sample such as DNA, protein or the like in a buffer agent, and discriminating the biological sample.

### BACKGROUND ART

When a general biological sample is considered, DNA and protein exist broadly. In recent years, with rapid progress of chemical biology, involvement of genome has been understood in various kinds of diseases with a fair degree of precision, and medical cares targeted at genome have attracted attention.

With respect to DNA, presently, SNPs (Single Nucleotide Polymorphism which is a general term for a difference of a single code (a single nucleotide) in genome) attract attention. The reason is as follows. By classifying SNPs, it is possible to predict the prevalence rates of many diseases, and the effects or sensitivities of individuals to medical agents, and furthermore, it is possible to realize perfect identification of an individual because human beings having completely the same SNPs never exist on the planet, even among parents and children or brothers.

Presently, as a method for examining SNPs, "sequencing" (determination of base sequence) in which a DNA base sequence is directly read from an end, has been adopted most commonly. Although there have been several reports about methods of performing the sequencing, "dideoxy sequencing" (Sanger method) has been carried out most commonly. The sequencing is, in any method including the Sanger method, established on the basis of a technique for separating/discriminating a difference in single-base lengths by denatured polyacrylamide gel electrophoresis having a high separation ability, or capillary electrophoresis. The classification of the SNPs by such sequencing method is carried out as follows. That is, after a target gene is isolated, the gene is amplified and purified, and then a base sequence of the target gene is read by using a method (apparatus) for determining a base sequence of gene. Therefore, enormous quantity of work and time and, further, great running cost are required for experiments, and an automatic device for determining a base sequence, which is used for the experiments, is very expensive and occupies a large space, and needs a great amount of expensive reagents.

These problems can almost be solved by using a method of separating DNA by affinity ligand capillary electrophoresis. The affinity ligand capillary electrophoresis makes the separation have specificity, by utilizing intermolecular affinity, particularly, specific affinity in ecosystem (enzyme-substrate affinity, antigen-antibody affinity, etc.). To be specific, analysis is carried out with attention to a phenomenon that, when one of two components that mutually react is added to an electrophoresis solution in a capillary tube while the other component is made to perform electrophoresis in the solution, only molecular species that mutually react in the sample mixture have variations in their migration speeds (for example, refer to Patent Document 1 (Japanese Published Patent Application No. Hei.7-311198)).

In the conventional affinity ligand capillary electrophoresis, as an affinity ligand that specifically recognizes a base sequence, a single-strand that is complementary to a base sequence of a specimen DNA is used. However, since an affinity ligand comprising polynucleotide as a component has a negative charge, when a voltage is applied thereto, the affinity ligand undesirably flows out of the capillary. In order to avoid this, conventionally, the single-strand that is complementary to the base sequence of the specimen DNA, which is the affinity ligand, is immobilized in the capillary. As a method for immobilization, there has been proposed a method of copolymerizing a vinyl DNA with polyacrylamide, and immobilizing the resultant copolymer covalently onto the inner wall of the capillary. Thereby, the specimen DNA strongly interacts with the immobilized oligonucleotide as the affinity ligand and is adsorbed to the inside of the capillary. On the other hand, the noise DNA flows out of the capillary without being adsorbed to the immobilized oligonucleotide. As a result, the specimen DNA can be detected (refer to Patent Document 1).

In this method, however, since the affinity ligand is coated onto only the inner wall of the capillary, the interaction between the affinity ligand and the sample is limited to the wall surface and its vicinity, leading to difficulty in measurement as well as deteriorated measurement precision.

So, the applicant of the present invention has discovered a method of pseudo immobilizing the affinity ligand in the capillary so that interaction between the affinity ligand and the sample is not limited to the wall surface and its vicinity. For example, a genetic testing apparatus and a genetic testing method as follows are proposed. That is, a first chamber and a second chamber in which electrodes are disposed respectively are connected by capillary tubes that are filled with a buffer solution including a linear polymer and a DNA bonding control agent, and a DNA conjugate for separation comprising a linear polymer to which a base sequence that is hydrogen-bondable to a target DNA as a detection target included in the DNA sample is bonded is added to the buffer solution in the capillary tubes, and then the DNA sample as a specimen is filled in the capillary tubes, and thereafter, a voltage is applied between the electrodes to make the DNA sample in the capillary tubes perform electrophoresis, thereby separating the DNA sample (refer to Patent Document 2 (Japanese Published Patent Application No.2002-340859)) .

Hereinafter, a method of pseudo immobilizing the affinity ligand in the capillary will be described. There are DNA forming a double strand and DNA forming a single strand. Among four bases A, T, C, and G of DNA, A and T or G and C are apt to be bonded each other. Also in the double strand of DNA, A-T or G-C are paired with each other. Accordingly, when one DNA is arranged in a base sequence of 5'-ATCGCGT-3', the other DNA has a base sequence of 3'-TAGCGCA-5'.

In a DNA conjugate for separating a DNA sample, in order to utilize the above-mentioned complementary relation of DNA, a DNA sequence having a complementary relation with mutant DNA in the DNA sample is given to a DNA portion of the DNA conjugate for separation. For example, when a DNA sequence of mutant DNA as a target DNA as a detection target in a DNA sample includes 5'-ATCGCGT-3' and a DNA sequence of wild DNA includes 5'-ATCACGT-3', the base of the mutant DNA and the base of the wild DNA differ at the underlined portions. At this time, if the sequence of the DNA portion of the DNA conjugate for separation is 3'-TAGCGCA-5', the wild DNA is not complementary to the DNA conjugate at the underlined portion. Thereby, the entire bonding force of the mutant DNA becomes by one base larger than that of the wild DNA, whereby the mutant DNA migrates slower than the wild DNA during electrophoresis.

A DNA sample is obtained by extracting DNA from blood or the like by destroying cells, and magnifying a portion including a target DNA sequence by PCR or the like. At this time, the magnification is carried out with a predetermined number of bases, whereby the number of bases of a DNA conjugate having a complementary sequence can also be determined.

According to the above-mentioned method, when the negatively charged DNA conjugate for separation and the DNA sample are migrated from the second container to the first container by electrophoresis, the affinity ligand is pseudo immobilized so that the interaction between the affinity ligand and the DNA specimen is not limited to the wall surface and its vicinity, and the wild DNA and the mutant DNA can be separated from each other due to a difference in the migration speed of the DNA sample. As a result, gene abnormality of SNPs can be discriminated in a short time, easily and precisely.

On the other hand, proteins exist in cells, tissues, and bio-fluids, and are involved in control of organic activities, supply of energies to cells, combination of important substances, maintenance of organic structures, and further, inter-cell communication and intra-cell information transmission. Currently, it is becoming clear that proteins have plural functions according to various environments, existences of other proteins for interaction, degrees and kinds of modifications given to the proteins.

A protein is a high polymer compound obtained by combining (polymerizing) a plurality of L-amino acids, and it is an important constituent of biological bodies. The sequence of the amino acids is called a primary structure of protein, and this sequence is determined by sequences of genes (DNA). To be specific, one amino acid is designated by three base sequences. Unit amino acid portions (-NH-CH(-R-)CO-) which become constituents of protein by peptide bonding are called amino-acid residues, and their natures differ depending on the respective R. A protein takes a secondary structure such as an α helix (helical) structure or a β sheet structure according to interaction of the residues, and further, takes a tertiary structure as the whole protein. The function of protein is determined according to the tertiary structure (cubic structure). That is, even proteins comprising the same amino acid sequence have different functions depending on their cubit structures (folding manners). For example, a prion that causes BSE is different from a normal prion only in the cubic structure. While studies relating to the cubic structures and functions of proteins are proceeding currently, it is believed that, in the future, cubic structures of proteins can be designed and synthesized in accordance with desired functions.

A protein is produced by connecting 20 kinds of amino acids in order according to a genetic instruction (sequence information), and it is said that there are tens of millions of proteins. If the genetic sequence is found, it is possible to obtain information as to what amino acids are connected in what order. An assembly of proteins that is produced from biotic genomes is called "proteome", and now analysis for proteome is increasingly carried out, after completion of sequencing of human genomes.

In analyzing and studying the functions of proteins, it is necessary to perform, not only identification and characterization, but also biochemical assay, investigation for inter-protein reactions, and elucidation of protein network or signaling in and out of cells. Various fields of technologies are employed in studying the protein functions, for example, enzyme assay, yeast two-hybrid assay, purification by chromatography, information tool and data base, and the like are employed. Particularly, discrimination of proteins by electrophoresis is an important scheme. There are various reports relating to fluid transportation and orientation in the case where sample analysis, discrimination, determination, and the like are carried out by detecting a transport reaction obtained when transferring a fluid such as a sample, an analyte, a buffer agent, or a reagent in a capillary tube by such as electrophoresis (for example, refer to Patent Document 3 (Japanese Published Patent No.2000-513813), Patent Document 4 (Japanese Published Patent No.2001-523341), Patent Document 5 (Japanese Published Patent No.2000-514928), and Patent Document 6 (Japanese Published Patent Application No.2003-28883)).

### DISCLOSURE OF THE INVENTION

### PROBLEMS TO BE SOLVED BY THE INVENTION

However, in the genetic testing apparatus and method described in Patent Document 2, it is necessary to fill a DNA conjugate for separation and a DNA sample in the capillary tubes which are filled with the buffer solution including the linear polymer and the DNA bonding control agent. It is a troublesome work to fill the DNA conjugate for separation and the DNA sample into the individual capillary tubes. Further, when filling the DNA conjugate for separation and the DNA sample, if the amounts thereof differ among the capillary tubes, the measurement results might be adversely affected.

Furthermore, in the methods described in Patent Documents 5 and 6, in order to perform sample separation, a plurality of capillary channels are crossed, at least three electrodes are provided, and a voltage is applied to two electrodes among the at least three electrodes, whereby the sample is migrated through the crossing points. In this method, however, since the channels are crossed, there is a possibility that the sample does not migrate satisfactorily during electrophoresis, leading to a problem that an accurate measurement result cannot be obtained. Further, in the methods described in Patent Document 3 and 4, a fine channel is embedded in a platform, and the rotation speed of the platform is varied to vary a centripetal force caused by the rotation, thereby to make the sample migrate. In this method, however, in addition to a problem that the sample is migrated only in the centripetal direction, the shape of the fine channel is considerably complicated.

The present invention is made to solve the above-described problems and has for its object to provide a compact, lightweight, and inexpensive biological sample discrimination apparatus, a biological sample discrimination method, and a biological sample discrimination plate used in the biological sample discrimination apparatus, which do not require complicated preparation works, and provide an accurate detection result in a short time, when performing discrimination of a biological sample by making the biological sample migrate in a buffer agent filled in channels.

### MEASUREMS TO SOLVE THE PROBLEMS

In order to solve the above-mentioned problems, a biological sample discrimination apparatus according to Claim 1 of the present invention comprises a plate on which a channel pattern is formed, the channel pattern comprising a first channel into which a buffer agent is injected, and a second channel having, in a portion thereof, a quantification part that has a portion common to the first channel, and holds a predetermined amount of a biological sample, the biological sample being injected into the channel including the quantification part; a filling unit for filling the buffer agent into the first channel of the plate while filling the biological sample into the second channel including the quantification part, and thereafter, making a predetermined amount of the biological sample remain in the quantification part of the second channel to add the predetermined amount of the biological sample to the buffer agent; and a discrimination unit for making the predetermined amount of the biological sample that is held in the quantification part migrate in the buffer agent to discriminate the biological sample that migrates in the buffer agent.

Therefore, when performing discrimination of the biological sample, a discrimination result of the biological sample can be obtained by only adding the biological sample as a target of discrimination and the buffer agent, thereby providing a biological sample discrimination apparatus that needs no complicated preparation works, and obtain an accurate discrimination result.

According to Claim 2 of the present invention, in the biological sample discrimination apparatus as defined in Claim 1, the plate has a buffer agent injection part connected to the first channel, a sample injection part connected to the second channel, and an air hole connected to the sample injection part in the second channel; and the filling unit rotates the plate in which the buffer agent is injected into the buffer agent injection part and the sample is injected into the sample injection part, thereby to make the buffer agent stored in the buffer agent injection part flow into the first channel by a centrifugal force, and simultaneously, make the biological sample stored in the sample injection part flow up to a first flow position that does not reach the quantification part in the second channel, pressurizes the sample injection part to make the biological sample in the second channel flow from the first flow position up to a second flow position including the quantification part in the second channel, and thereafter, rotates the plate to separate the biological sample in the second channel so that a predetermined amount of the biological sample remains in the quantification part of the second channel.

Therefore, the process of filling the buffer agent into the channels can be realized by a centrifugal force, and the quantitative addition process of adding a predetermined amount of the biological sample into the buffer agent can also be realized by the centrifugal force, thereby providing a biological sample discrimination apparatus that needs no complicated preparation works, and can obtain an accurate discrimination result in a short time.

According to Claim 3 of the present invention, in the biological sample discrimination apparatus as defined in Claim 1, the plate has a buffer agent injection part connected to the first channel, a sample injection part connected to the second channel, and an air hole connected to the sample injection part in the second channel; and the filling unit rotates the plate in which the buffer agent is injected into the buffer agent injection part and the sample is injected into the sample injection part, thereby to make the buffer agent stored in the buffer agent injection part flow into the first channel by a centrifugal force, and simultaneously, make the biological sample stored in the sample injection part flow up to a first flow position that does not reach the quantification part in the second channel, pressurizes the sample injection part to make the biological sample in the second channel flow from the first flow position up to a second flow position including the quantification part in the second channel, and thereafter, performs aspiration from the air hole to separate the biological sample in the second channel so that a predetermined amount of the biological sample remains in the quantification part of the second channel.

Therefore, the process of filling the buffer agent into the channels can be realized by a centrifugal force, and the process of filling the biological sample into the channels and the quantitative addition process of adding a predetermined amount of the biological sample into the buffer agent can be realized by a difference in pressures generated in the channels, thereby providing a biological sample discrimination apparatus that needs no complicated preparation works, and can obtain an accurate discrimination result in a short time.

According to Claim 4 of the present invention, in the biological sample discrimination apparatus as defined in Claim 2 or 3, the filling unit includes a motor for rotating the plate at a high speed, and a pressure control part for pressurizing or aspirating the second channel.

Therefore, it is possible to transfer the biological sample and the buffer agent in the channels, by applying a centrifugal force to the buffer agent and the biological sample in the channels or by generating a difference in pressures in the channels. Accordingly, when performing discrimination of the biological sample, it is only needed to add the biological sample as a target of discrimination and the buffer agent onto the plate, and complicated preparation works can be dispensed with.

According to Claim 5 of the present invention, in the biological sample discrimination apparatus as defined in Claim 2 or 3, the filling unit is disposed at a lower part of the biological sample discrimination apparatus while the discrimination unit is disposed at an upper part of the apparatus; and the apparatus further including an elevation stage for vertically driving the plate between the filling unit and the discrimination unit.

Therefore, the plate can be moved between the discrimination unit and the filling unit to make the respective units perform the quantitative addition process and the filling process, whereby the biological sample discrimination apparatus can be made more compact and inexpensive.

According to Claim 6 of the present invention, in the biological sample discrimination apparatus as defined in Claim 5, the discrimination unit is hung, via a spring, from a ceiling board which is provided in an upper portion of the apparatus.

Therefore, the discrimination unit can be easily disposed in the upper part of the apparatus, and the constituents of the discrimination unit can be reliably brought into contact with the plate, whereby the apparatus can be made more compact as well as an accurate discrimination result can be obtained.

According to Claim 7 of the present invention, in the biological sample discrimination apparatus as defined in Claim 6, a pressure control unit for pressurizing or aspirating the second channel is hung from the ceiling board via a spring.

Therefore, the apparatus can be made more compact.

According to Claim 8 of the present invention, in the biological sample discrimination apparatus as defined in Claim 2 or 3, the discrimination unit includes a heater for measuring a temperature of the first channel with a thermistor, and controlling the first channel to a predetermined temperature in accordance with a result of the measurement.

Therefore, in this apparatus, the temperature of the first channel can be kept in the same condition, whereby more accurate discrimination result can be obtained in the apparatus.

According to Claim 9 of the present invention, in the biological sample discrimination apparatus as defined in Claim 8, the discrimination unit includes, instead of the heater and the thermistor, a heat contact pin and a thermistor contact pin for applying a voltage to a heater and a thermistor which are provided on the plate.

Therefore, the discrimination unit can be made more compact, whereby the apparatus can be made more compact, lightweight, and inexpensive.

According to Claim 10 of the present invention, in the biological sample discrimination apparatus as defined in Claim 8, the heater is disposed on the first channel, and the thermistor is disposed at a position that is separated from the heater by a distance between the first channel and the heater.

Therefore, the first channel can be set at a predetermined temperature without an error by measuring the temperature of the first channel at a value near the actual temperature with the thermistor, whereby more accurate discrimination result can be obtained in the apparatus.

According to Claim 11 of the present invention, in the biological sample discrimination apparatus as defined in Claim 8, the thermistor is disposed on the first channel, and the heater is disposed at a position that is separated from the thermistor by a distance between the first channel and the thermistor.

Therefore, more accurate discrimination result can be obtained as described above.

According to Claim 12 of the present invention, in the biological sample discrimination apparatus as defined Claim 2 or 3, the discrimination unit includes a fitting pint to be inserted into a fitting pin hole provided on the plate, and a low-speed rotation motor for rotating the discrimination unit at a low speed, and after the plate is fitted and fixed to the discrimination unit with the fitting pin, the plate as well as the discrimination unit are rotated at a low speed by the low-speed rotation motor, and the biological sample that migrates in the buffer agent is discriminated during the low-speed rotation of the plate.

Therefore, the plate and the discrimination unit can be integrated to be rotated by the motor, whereby more accurate discrimination result can be obtained in the apparatus.

According to Claim 13 of the present invention, in the biological sample discrimination apparatus as defined in Claim 12, the discrimination unit includes a positioning mark detection sensor for detecting a positioning mark that is provided on the plate, and the plate is rotated at a low speed by the low-speed rotation motor, and the fitting pin hole on the plate is detected by the positioning mark detection sensor to determine the position of the plate, and thereafter, the fitting pin is inserted in the fitting pin hole.

Therefore, the plate and the discrimination unit can be reliably fitted to each other.

According to Claim 14 of the present invention, in the biological sample discrimination apparatus as defined in Claim 2 or 3, the discrimination unit is provided with a positive electrode and a negative electrode, and after the filling unit separates the biological sample in the second channel so that a predetermined amount of the biological sample remains in the quantification part of the second channel, the positive electrode and the negative electrode are inserted in the first channel, and a voltage is applied between the positive electrode and the negative electrode to make the predetermined amount of the biological sample stored in the quantification part migrate by electrophoresis in the buffer agent, whereby the biological sample that migrates in the buffer agent is discriminated.

Therefore, the biological sample added to the buffer agent that is filled in the first channel can be transferred by electrophoresis, and a discrimination result can be obtained on the basis of the transfer state, whereby an accurate discrimination result can be obtained in a shorter time in the apparatus.

According to Claim 15 of the present invention, in the biological sample discrimination apparatus as defined in Claim 14, the plate is provided with a cleaning region for cleaning the positive electrode and the negative electrode, and after the filling unit separates the biological sample in the second channel so that a predetermined amount of the biological sample remains in the quantification part of the second channel, the positive electrode and the negative electrode are cleaned in the cleaning region, and then the positive electrode and the negative electrode are inserted into the first channel.

Therefore, foreign objects such as dust which are attached to the positive and negative electrodes while the apparatus is stored can be rinsed away, whereby more accurate discrimination result can be obtained in the apparatus.

According to Claim 16 of the present invention, in the biological sample discrimination apparatus as defined in Claim 14, the discrimination unit includes, instead of the positive electrode and the negative electrode, two electrode contact pins for applying a voltage to a positive electrode and a negative electrode which are provided on the plate.

Therefore, the discrimination unit can be made more compact, whereby the apparatus can be made more compact, lightweight, and inexpensive.

According to Claim 17 of the present invention, in the biological sample discrimination apparatus as defined in Claim 14, the biological sample is a DNA sample, and the buffer agent contains a DNA conjugate for separation comprising a linear polymer to which a base sequence that is hydrogen-bondable to a target DNA as a detection target included in the DNA sample is bonded, a DNA bonding control agent, and a pH buffer agent.

Therefore, in this apparatus, presence/absence of SNPs in the DNA sample as a test target can be discriminated in a short time, accurately, without requiring complicated preparation works.

According to Claim 18 of the present invention, the biological sample discrimination apparatus as defined in Claim 1 further includes a cooling fan for cooling the increased temperature in the apparatus, and a light cutoff part for cutting off light incident from the outside of the apparatus, which is disposed on an air intake port of the cooling fan.

Therefore, the interior of the apparatus can be cooled by circulating air without incidence of light into the apparatus, whereby the biological sample can be accurately discriminated in the apparatus.

According to Claim 19 of the present invention, in the biological sample discrimination apparatus as defined in Claim 18, the light cutoff part comprises a porous film.

Therefore, in this apparatus, the biological sample can be accurately discriminated, as described above.

According to Claim 20 of the present invention, in the biological sample discrimination apparatus as defined in Claim 18, the light cutoff part comprises an L-shaped or crank-shaped baffle plate.

Therefore, in this apparatus, the biological sample can be accurately discriminated, as described above.

According to Claim 21 of the present invention, in the biological sample discrimination apparatus as defined in Claim 2 or 3, the discrimination unit includes an optical detector for detecting a fluorescence or an absorbance of the buffer agent that is filled in the first channel, and discriminates the biological sample that migrates in the buffer agent, on the basis of a result of the detection by the optical detection unit.

Therefore, the migration state of the biological sample that migrates in the buffer agent can be detected by scanning the first channel with the optical detection unit, whereby an accurate discrimination result can be obtained in a short time.

According to Claim 22 of the present invention, in the biological sample discrimination apparatus as defined in Claim 21, the optical detection unit is disposed on an elevation stage for vertically moving the plate, and a height adjustment unit for measuring a distance between the plate and the elevation stage and performing adjustment so as to make the measurement result constant is disposed on the elevation stage.

Therefore, the distance between the optical detection unit and the plate can be kept constant, whereby more accurate discrimination result can be obtained in the apparatus.

According to Claim 23 of the present invention, a biological sample discrimination method for detecting a biological sample that migrates in a buffer agent to discriminate the biological sample, comprises: using a plate on which a channel pattern is formed, the channel pattern including a first channel into which the buffer agent is injected, and a second channel having, in a portion thereof, a quantification part that has a portion common to the first channel, and holds a predetermined amount of a biological sample, the biological sample being injected into the channel including the quantification part; filling the buffer agent in the first channel; filling the biological sample in the second channel including the quantification part; leaving a predetermined amount of the biological sample in the quantification part of the second channel, and adding the predetermined amount of the biological sample to the buffer agent; and making the predetermined amount of the biological sample migrate in the buffer agent to discriminate the biological sample that migrates in the buffer agent.

Therefore, a discrimination result of the biological sample can be obtained by only adding the biological sample as a discrimination target and the buffer agent onto the plate, whereby complicated preparation works are dispensed with, and an accurate discrimination result can be obtained.

According to Claim 24 of the present invention, the biological sample discrimination method as defined in Claim 23 comprises: rotating, at a high speed, a plate on which a channel pattern is formed, the channel pattern including the first channel into which the buffer agent is injected, the second channel including the quantification part into which the biological sample is injected, and an air hole that is connected to a sample injection part for injecting the biological sample, thereby to make the buffer agent flow into the first channel by a centrifugal force to fill the first channel, and simultaneously, make the biological sample flow up to a first flow position that does not reach the quantification part in the second channel; pressurizing the sample injection part of the second channel to make the biological sample in the second channel flow from a first flow position to a second flow position including the quantification part in the second channel; rotating the plate at a high speed to separate the biological sample in the second channel so that a predetermined amount of the biological sample remains in the quantification part of the second channel by a centrifugal force; setting the first channel at a constant temperature; and making the predetermined amount of the biological sample stored in the quantification part migrate in the buffer agent to discriminate the biological sample that migrates in the buffer agent.

Therefore, the process of filling the buffer agent into the channels can be realized by a centrifugal force, and the process of filling the biological sample can be realized by a difference in pressures generated in the channels, and further, the quantitative addition process of adding a predetermined amount of the biological sample into the buffer agent can be realized by the centrifugal force, whereby complicated preparation works are dispensed with, and an accurate discrimination result can be obtained in a short time, as described above.

According to Claim 25 of the present invention, the biological sample discrimination method as defined in Claim 23 comprises: rotating, at a high speed, a plate on which a channel pattern is formed, the channel pattern including the first channel into which the buffer agent is injected, the second channel including the quantification part into which the biological sample is injected, and an air hole that is connected to a sample injection part for injecting the biological sample, thereby to make the buffer agent flow into the first channel by a centrifugal force to fill the first channel, and simultaneously, make the biological sample flow up to a first flow position that does not reach the quantification part in the second channel; pressurizing the sample injection part of the second channel to make the biological sample in the second channel flow from a first flow position to a second flow position including the quantification part in the second channel; performing aspiration from the air hole of the second channel to separate the biological sample in the second channel so that a predetermined amount of the biological sample remains in the quantification part of the second channel; setting the first channel at a constant temperature; and making the predetermined amount of the biological sample stored in the quantification part migrate in the buffer agent to discriminate the biological sample that migrates in the buffer agent.

Therefore, the process of filling the buffer agent into the channels can be realized by a centrifugal force, and the process of filling the biological sample into the channels and the quantitative addition process of adding a predetermined amount of the biological sample into the buffer agent can be realized by a difference in pressures generated in the channels, thereby providing a biological sample discrimination apparatus that needs no complicated preparation works, and can obtain an accurate discrimination result in a short time.

According to Claim 26 of the present invention, there is provided a plate for performing discrimination of a biological sample, having a channel pattern comprising: a buffer agent injection part for injecting a buffer agent that reacts with the biological sample into the plate; a first channel connected to the buffer agent injection part; a sample injection part for injecting the biological sample into the plate; and a second channel connected to the sample injection part; wherein the second channel includes, in a portion thereof, a quantification part for holding a predetermined amount of the biological sample to be supplied to the first channel, and the first channel and the second channel being connected through the quantification part.

Therefore, it is possible to provide a biological sample discrimination plate having a channel pattern in which a predetermined amount of the biological sample can be added to the buffer agent in the quantification part when the buffer agent and the biological sample are filled in the first channel and the second channel, respectively.

According to Claim 27 of the present invention, in the biological sample discrimination plate as defined in Claim 26, the first channel and the second channel contact parallel to each other via the quantification part.

Therefore, a predetermined amount of the biological sample can be added into the buffer agent in the quantification part.

According to Claim 28 of the present invention, in the biological sample discrimination plate as defined in Claim 26, first and second electrode insertion parts into which positive and negative electrode parts or a positive electrode and a negative electrode are inserted are provided in the first channel.

Therefore, a predetermined amount of the biological sample added into the buffer agent can be made perform electrophoresis in the buffer agent.

According to Claim 29 of the present invention, in the biological sample discrimination plate as defined in Claim 26, the buffer agent injection parts are provided at the both ends of the first channel, and an air hole connected to the sample injection part is provided in the second channel.

Therefore, the buffer agent can be filled from the both ends of the first channel, whereby the buffer agent can be filled in a short time without including bubbles in the first channel.

According to Claim 30 of the present invention, in the biological sample discrimination plate as defined in Claim 26, after the buffer agent is injected into the buffer agent injection part and the biological sample is injected into the sample injection part; in a first step, the buffer agent injected from the buffer agent injection part is filled in the first channel; in a second step, the biological sample injected from the sample injection part is filled in the second channel including the quantification part; in a third step, the biological sample in the second channel is separated to make a predetermined amount of the biological sample remain in the quantification part; and in a fourth step, the remaining predetermined amount of the biological sample migrates in the buffer agent in the first channel.

Therefore, a predetermined amount of the biological sample can be added to the buffer agent in the quantification part when the buffer agent and the biological sample are filled in the first channel and the second channel, respectively, whereby complicated preparation works during discrimination of the biological sample can be dispensed with.

According to Claim 31 of the present invention, in the biological sample discrimination plate as defined in Claim 30, the first step is filling the buffer agent into the first channel by pressurization, aspiration, or capillary phenomenon.

Therefore, the buffer agent can be filled in the first channel easily in a short time.

According to Claim 32 of the present invention, in the biological sample discrimination plate as defined in Claim 30, the second step of filling the biological sample into the second channel including the quantification part by pressurization, aspiration, or capillary phenomenon.

Therefore, the biological sample can be filled in the second channel easily in a short time.

According to Claim 33 of the present invention, there is provided a biological sample discrimination plate for detecting a biological sample that migrates in a buffer agent to discriminate the biological sample, and the plate has a channel pattern comprising: a first channel having a portion in which the buffer agent is injected, the first channel being filled with the buffer agent when the plate is rotated at a high speed; and a second channel including, in a portion thereof, a quantification part that has a portion common to the first channel, and holds a predetermined amount of the biological sample, the biological sample being flowed up to a first flow position that does not reach the quantification part when the plate is rotated at a high speed, and the biological sample stored in the second channel being flowed from the first flow position to a second flow position including the quantification part when the plate is pressurized.

Therefore, the biological sample can be filled in the second channel after the buffer agent is filled in the first channel, whereby a predetermined amount of the biological sample can be reliably added into the buffer agent.

According to Claim 34 of the present invention, in the biological sample discrimination plate as defined in Claim 33, first and second electrode insertion parts into which a negative electrode and a positive electrode are inserted are provided in a portion of the first channel.

Therefore, a predetermined amount of the biological sample added into the buffer agent can be made perform electrophoresis in the buffer agent.

According to Claim 35 of the present invention, in the biological sample discrimination plate as defined in Claim 33, the first channel comprises a channel having a round shape comprising an inner circumference channel positioned on an inner circumference side of an arc-shaped channel that extends in a circumference direction of a circle the center of which corresponds to the center of the biological sample discrimination plate, an outer circumference channel positioned on an outer circumference side thereof, and a radiation channel that extends in a radiation direction from the center of the circle, the radiation channel connecting both ends of the inner circumference channel and the outer circumference channel; the second channel comprises the arc-shaped channel positioned between the inner circumference channel and the outer circumference channel, and a U-shaped channel provided in a portion of the arc-shaped channel; and the quantification part comprises a portion of the outer circumference channel, and a portion of the U-shaped channel in the second channel, which portions contact in parallel to each other.

Therefore, after the buffer agent is easily filled in the first channel in a short time without including bubbles, the biological sample can be filled in the second channel without including bubbles, and further, the biological sample can be added into the buffer agent that is filed in the first channel in the quantification part.

According to Claim 36 of the present invention, in the biological sample discrimination plate as defined in Claim 35, the buffer agent injection part in which the buffer agent is injected, which is connected to the first channel, is positioned on the inner circumference side of the first channel.

Therefore, the buffer agent added to the buffer agent injection part can be reliably filled in the first channel in a short time by a centrifugal force.

According to Claim 37 of the present invention, in the biological sample discrimination plate as defined in Claim 35, the sample injection part in which the biological sample is injected, which is connected to the second channel, is positioned on the inner circumference side of the second channel.

Therefore, the biological sample added to the sample injection part can be flowed into the second channel by a centrifugal force without including bubbles in the second channel.

According to Claim 38 of the present invention, in the biological sample discrimination plate as defined in Claim 34, the first and second electrode insertion parts are provided in a portion of the radiation channel of the first channel.

Therefore, when the buffer agent is filled in the first channel, it is avoided that bubbles are included inside the first and second electrode insertion parts.

According to Claim 39 of the present invention, in the biological sample discrimination plate as defined in Claim 35, a buffer agent injection part for injecting the buffer agent is provided approximately in the center of the inner circumference channel of the first channel.

Therefore, when the buffer agent is injected into the buffer agent injection part, the buffer agent is separated into two from the center of the inter circumference channel of the first channel toward the both ends thereof, whereby it is avoided that bubbles are included in the first channel when the buffer agent is filled in the first channel 1 by a centrifugal force.

According to Claim 40 of the present invention, in the biological sample discrimination plate as defined in Claim 35, when the buffer agent is filled in the first channel, the buffer agent is filled in the outer circumference channel and the first and second electrode insertion parts, in the first channel.

Therefore, the biological sample added into the buffer agent that is filled in the first channel is reliably made to perform electrophoresis, whereby an accurate discrimination result can be obtained.

According to Claim 41 of the present invention, in the biological sample discrimination plate as defined in Claim 35, the arc-shaped channel in the inner circumference channel is positioned on an ellipse arc in which the channel slightly deviates to the outer circumference channel side from the circular arc.

Therefore, when the buffer agent is filled in the first channel by a centrifugal force, it is avoided that the flow of the buffer agent stops halfway or bubbles are included in the channel.

According to Claim 42 of the present invention, in the biological sample discrimination plate as defined in Claim 35, the channel width of the inner circumference channel is wider than the channel width of the outer circumference channel.

Therefore, the time from when the buffer agent is injected into the first channel to when the buffer agent reaches the first and second electrode insertion parts can be shortened, whereby releasing of air existing in the channel can be promoted, and the time until the buffer agent is filled in the first channel can be shortened.

According to Claim 43 of the present invention, in the biological sample discrimination plate as defined in Claim 35, the outer circumference channel has a channel length adjustment part for adjusting a difference between the length of a channel from the first electrode insertion part and the quantification part, and the length of a channel from the second electrode insertion part to the quantification part.

Therefore, the length from the first electrode insertion part and the quantification part and the length from the second electrode insertion part to the quantification part can be approximately equal to each other, whereby it is avoided that bubbles are included in the outer circumference channel.

According to Claim 44 of the present invention, in the biological sample discrimination plate as defined in Claim 35, a sample injection part for injecting the biological sample is provided at an end of the second channel, and a sample pool for holding the biological sample injected from the sample injection part when the biological sample is filled in the second channel is provided at the other end of the second channel.

Therefore, the biological sample can be reliably filled in the second channel by generating a pressure difference in the second channel.

According to Claim 45 of the present invention, in the biological sample discrimination plate as defined in Claim 28 or 34, a heater for heating the first channel and a thermistor for measuring the temperature of the first channel are provided above the first channel, and a positive electrode and a negative electrode are provided in the first and second electrode insertion parts, respectively.

Therefore, the temperature of the first channel can be easily adjusted, whereby more accurate discrimination result can be obtained, and furthermore, a biological sample discrimination apparatus in which the plate is loaded can be made more compact and lightweight.

According to Claim 46 of the present invention, in the biological sample discrimination plate as defined in Claim 28 or 34, the first and second electrode insertion parts have air holes.

Therefore, air release can be carried out from the air holes provided at the first and second electrode insertion parts, whereby it is avoided that bubbles are included in the outer circumference channel when the buffer agent is filled in the channel by a centrifugal force.

According to Claim 47 of the present invention, in the biological sample discrimination plate as defined in Claim 44, the sample pool has an air hole.

Therefore, air release can be carried out from the air hole provided at the sample pool, whereby it is avoided that bubbles are included in the outer circumference channel when the buffer agent is filled in the channel by a centrifugal force.

According to Claim 48 of the present invention, in the biological sample discrimination plate as defined in Claim 26 or 33, the biological sample is a DNA sample, and the buffer agent contains a DNA conjugate for separation comprising a linear polymer to which a base sequence that is hydrogen-bondable to a target DNA as a detection target included in the DNA sample is bonded, a DNA bonding control agent, and a pH buffer agent.

Therefore, presence/absence of SNPs in the DNA sample as a discrimination target can be discriminated in the biological sample discrimination plate.

According to Claim 49 of the present invention, in the biological sample discrimination plate as defined in Claim 28 or 34, electrode insertion ports into which the positive electrode and the negative electrode are inserted are provided at the first and second electrode insertion parts, and cover films are put on the electrode insertion parts.

Therefore, it is possible to prevent the buffer agent from flowing over the electrode insertion holes even when the biological sample discrimination plate is rotated at a high speed.

According to Claim 50 of the present invention, in the biological sample discrimination plate as defined in Claim 26 or 33, a plurality of the channel patterns are formed on the biological sample discrimination plate.

Therefore, a lot of detection results can be obtained with a single-time operation of the biological sample discrimination apparatus.

According to Claim 51 of the present invention, in the biological sample discrimination plate as defined in Claim 28 or 34, a cleaning region for cleaning the positive electrode and the negative electrode are provided on the biological sample discrimination plate, and the positive electrode and the negative electrode are cleaned in the cleaning region, and thereafter, the positive electrode and the negative electrode are inserted in the first channel.

Therefore, foreign objects such as dust which are attached to the positive and negative electrodes can be rinsed away before measurement is started, whereby more accurate discrimination result can be obtained in the apparatus.

According to Claim 52 of the present invention, in the biological sample discrimination plate as defined in Claim 28 or 34, the buffer agent injection parts are provided at both ends of the first channel, and the buffer agent injection parts are used also as the electrode parts or the electrode insertion parts.

Therefore, the shape of the channel pattern can be simplified, and the entire shape of one channel pattern can be made compact, whereby a plurality of channel patterns can be formed on the plate.

According to Claim 53 of the present invention, in the biological sample discrimination plate as defined in Claim 26 or 33, the first channel and the second channel are formed by grooves that are formed on the plate surface, and a film that covers the plate surface.

Therefore, hermetically-sealed channels can be produced with simple constructions, whereby the channel patterns can be easily formed on the plate.

According to Claim 54 of the present invention, in the biological sample discrimination plate as defined in Claim 26 or 33, the first channel and the second channel are formed on the same surface of the plate.

Therefore, the channel patterns can be easily formed on the plate.

According to Claim 55 of the present invention, in the biological sample discrimination plate as defined in Claim 26 or 33, the first channel and the second channel are formed on different surfaces of the plate.

Therefore, the buffer agent injection port and the sample injection port can be formed on different planes, whereby it is avoided that different solutions are injected to the injection ports by mistake.

### EFFECTS OF THE INVENTION

According to the present invention, a biological sample discrimination apparatus is provided with a plate on which a channel pattern is formed, the channel pattern comprising a first channel into which a buffer agent is injected, and a second channel having, in a portion thereof, a quantification part that has a portion common to the first channel, and holds a predetermined amount of a biological sample, the biological sample being injected into the channel including the quantification part, and furthermore, the apparatus is provided with a filling unit for filling the buffer agent into the first channel of the plate while filling the biological sample into the second channel including the quantification part, and thereafter, making a predetermined amount of the biological sample remain in the quantification part of the second channel to add the predetermined amount of the biological sample to the buffer agent, and a discrimination unit for making the predetermined amount of the biological sample that is held in the quantification part migrate in the buffer agent to discriminate the biological sample that migrates in the buffer agent. Therefore, it is possible to provide a biological sample discrimination apparatus that needs no complicated preparation works when performing discrimination of the biological sample, and can obtain an accurate discrimination result in a short time.

Further, according to the biological sample discrimination apparatus of the present invention, the filling unit is disposed in a lower part of the apparatus, and the discrimination unit is disposed in the upper part of the apparatus, and further, an elevation stage for moving the plate between the filling unit and the discrimination unit is provided. Therefore, the biological sample discrimination apparatus can be made compact and lightweight.

Furthermore, the filling unit is provided with a motor for rotating the plate at a high speed, and the discrimination unit is provided with a pressure operation unit for generating a pressure difference in the second channel. Therefore, the buffer agent and the biological sample can be reliably filled in the first channel and the second channel, respectively, and a predetermined amount of the biological sample can be measured to add it into the buffer agent.

Moreover, since the discrimination unit is provided with a positive electrode and a negative electrode, a predetermined amount of the biological sample added into the buffer agent can be transferred by electrophoresis.

Further, an optical detection unit for detecting a fluorescence or an absorbance is provided, and the first channel is scanned to detect the migration state of the biological sample that migrates in the buffer agent, thereby to discriminate the biological sample. Therefore, an accurate discrimination result can be obtained easily in a short time.

A biological sample discrimination method according to the present invention employs a plate having a first channel into which the buffer agent is injected, and a second channel having, in a portion thereof, a quantification part that has a portion common to the first channel, and holds a predetermined amount of a biological sample, the biological sample being injected into the channel including the quantification part, and fills the buffer agent in the first channel and the biological sample in the second channel, and then quantifies a predetermined amount of the biological sample to add the sample into the buffer agent, and thereafter, discriminates the biological sample that migrates in the buffer agent. Therefore, complicated preparation works are dispensed with, and discrimination of the biological sample can be carried out accurately in a short time.

Further, according to a biological sample discrimination plate of the present invention, a channel pattern formed on the plate includes a first channel in which the buffer agent is injected into a portion thereof, and the buffer agent is filled therein when the biological sample discrimination plate is rotated at a high speed, and a second channel having a portion common to the first channel, in which the biological sample is injected into a portion thereof, and the biological sample is distributed by centrifugation when the biological sample discrimination plate is rotated at a high speed, and the biological sample is filled therein when the plate is pressurized. Therefore, the biological sample discrimination apparatus can be made compact, lightweight, and inexpensive, and further, complicated preparation works are dispensed with, and discrimination of the biological sample can be carried out accurately in a short time.

### BRIEF DESCRIPTION OF THE DRAWINGS

Figure 1 is a diagram illustrating an construction of a biological sample discrimination apparatus according to a first embodiment of the present invention.
Figure 2(a) is a detail view illustrating an example of a construction of a cooling fan and its vicinity in the biological sample discrimination apparatus according to the first embodiment of the present invention.
Figure 2(b) is a detail view illustrating another example of a construction of a cooling fan and its vicinity in the biological sample discrimination apparatus according to the first embodiment of the present invention.
Figure 3(a) is a diagram illustrating an upper surface of a plate according to the first embodiment of the present invention.
Figure 3(b) is a diagram illustrating a lower surface of the plate according to the first embodiment of the present invention.
Figure 3(c) is a A-A cross-sectional view of the plate according to the first embodiment of the present invention.
Figure 4 is a diagram illustrating a pattern formed on the plate according to the first embodiment of the present invention.
Figure 5 is a flowchart illustrating a series of operations of the biological sample discrimination apparatus according to the first embodiment of the present invention.
Figure 6(a) is a diagram at a point in time when a sample is injected into the pattern formed on the plate according to the first embodiment of the present invention.
Figure 6(b) is a diagram at a point in time when a conjugate filling process is performed to the pattern formed on the plate according to the first embodiment of the present invention.
Figure 6(c) is a diagram after the conjugate filling process that is performed to the pattern formed on the plate according to the first embodiment of the present invention.
Figure 6(d) is a diagram after a pressurization process is performed to the pattern formed on the plate according to the first embodiment of the present invention.
Figure 6(e) is a diagram after a predetermined amount addition process is performed to the pattern formed on the plate according to the first embodiment of the present invention.
Figure 7(a) is a diagram illustrating a first-level position of an elevation stage of the biological sample discrimination apparatus according to the first embodiment of the present invention.
Figure 7(b) is a diagram illustrating the state where the elevation stage is moving from the first-level position to the second-level position, in the biological sample discrimination apparatus according to the first embodiment of the present invention.
Figure 7(c) is a diagram illustrating the state where the elevation stage is moving from the first-level position to the second-level position, in the biological sample discrimination apparatus according to the first embodiment of the present invention.
Figure 7(d) is a diagram illustrating the second-level position of the elevation stage of the biological sample discrimination apparatus according to the first embodiment of the present invention.
Figure 8 is a diagram illustrating a signal from a plate fitting position detection sensor of the biological sample discrimination apparatus according to the first embodiment of the present invention.
Figure 9 is a diagram illustrating characteristics of the pattern formed on the plate according to the first embodiment of the present invention.
Figure 10(a) is a diagram illustrating an example of a positional relation between a thermistor and a heater in the biological sample discrimination apparatus according to the first embodiment of the present invention.
Figure 10(b) is a diagram illustrating another example of a positional relation between the thermistor and the heater in the biological sample discrimination apparatus according to the first embodiment of the present invention.
Figure 11 is a diagram illustrating the state where a DNA sample is filled in a second channel formed on the plate according to the first embodiment of the present invention, and the DNA sample migrates in a DNA conjugate solution that is filled in a first channel.
Figure 12 is a diagram illustrating a result of measurement of an absorbance of a DNA sample in the biological sample discrimination apparatus according to the first embodiment of the present invention.
Figure 13 is a diagram for explaining the principle of the biological sample discrimination apparatus according to the first embodiment of the present invention.
Figure 14 is a diagram illustrating the case where four patterns are formed on a lower surface of the plate according to the first embodiment of the present invention.
Figure 15 is a diagram illustrating a construction of a biological sample discrimination apparatus according to a second embodiment of the present invention.
Figure 16 is a cross-sectional view of a plate according to the second embodiment of the present invention.
Figure 17 is a diagram illustrating another construction of the biological sample discrimination apparatus according to the second embodiment of the present invention.
Figure 18 is a cross-sectional view illustrating another construction of the plate according to the second embodiment of the present invention.
Figure 19 is a cross-sectional view illustrating an example of a plate according to a third embodiment of the present invention.
Figure 20 is a cross-sectional view illustrating another example of a plate according to the third embodiment of the present invention.
Figure 21 is a diagram illustrating a portion of the construction of the biological sample discrimination apparatus according to the third embodiment of the present invention.
Figure 22(a) is a diagram illustrating an example of a construction of an optical detection unit included in a biological sample discrimination apparatus according to a fourth embodiment of the present invention.
Figure 22(b) is a diagram illustrating another example of the construction of the optical detection unit included in the biological sample discrimination apparatus according to the fourth embodiment of the present invention.
Figure 22(c) is a diagram illustrating another example of the construction of the optical detection unit included in the biological sample discrimination apparatus according to the fourth embodiment of the present invention.
Figure 23(a) is a diagram illustrating a sample injection surface of a biological sample discrimination plate according to a fifth embodiment of the present invention.
Figure 23(b) is a diagram illustrating a channel formation surface of the biological sample discrimination plate according to the fifth embodiment of the present invention.
Figure 24 is a diagram illustrating an example of a pattern formed on the biological sample discrimination plate according to the fifth embodiment of the present invention.

### DESCRIPTION OF REFERENCE NUMERALS

- 10: plate
- 10a: aperture
- 11: fitting pin hole
- 12: positioning mark
- 13: plate recognition mark
- 14: capillary seal
- 15: cover film
- 16: cleaning region
- 20: filling unit
- 21: high-speed rotation motor
- 21a: plate receiving part
- 22: plate holding part
- 23: plate recognition sensor
- 24: pressurization part
- 30: discrimination unit
- 31: fitting pin
- 32a,32b: electrodes
- 33: heater
- 34, 142: thermistors
- 35: positioning mark detection sensor
- 36: clamper
- 37: ceiling plate
- 38: low-speed rotation motor
- 40: optical detection unit
- 41: height adjustment unit
- 41a: micrometer
- 41b: voice coil motor
- 41c: piezoelectric element
- 42: distance measurement unit
- 50: elevation stage
- 51: vertical drive motor
- 52: pressurization pump
- 53: pump tube
- 54: inner temperature detection sensor
- 55: heater temperature detection sensor
- 60: casing
- 61: door
- 62: power supply switch
- 63: LED
- 64: cooling fan
- 65a,65b: rubber legs
- 66: high-voltage power supply
- 67: device power supply
- 68: control substrate
- 69a: baffle plate
- 69b: filter
- 100,200,300: biological sample discrimination apparatuses
- 110: channel pattern
- 111: first electrode insertion part
- 112: second electrode insertion part
- 113: buffer agent injection part
- 114: sample injection part
- 115: sample pool
- 116: first channel
- 116a: inner circumference channel
- 116b: outer circumference channel
- 117: second channel
- 117a: quantification part
- 118: first electrode standby hole
- 119: second electrode standby hole
- 121,122: electrode insertion ports
- 123,124: injection ports
- 131,132,135: air holes
- 136: pressurization standby hole
- 141: heater electrode thin film
- 143a: first electrode
- 143b: second electrode
- 232a,232b: electrode contact pins
- 233: heater contact pin
- 234: thermistor contact pin
- 301: electrode cleaning bath
- A: sample quantification part
- B: halfway channel from first electrode insertion part to quantification part A
- C: electrophoresis region
- R: corner

### BEST MODE TO EXECUTE THE INVENTION

### (Embodiment 1)

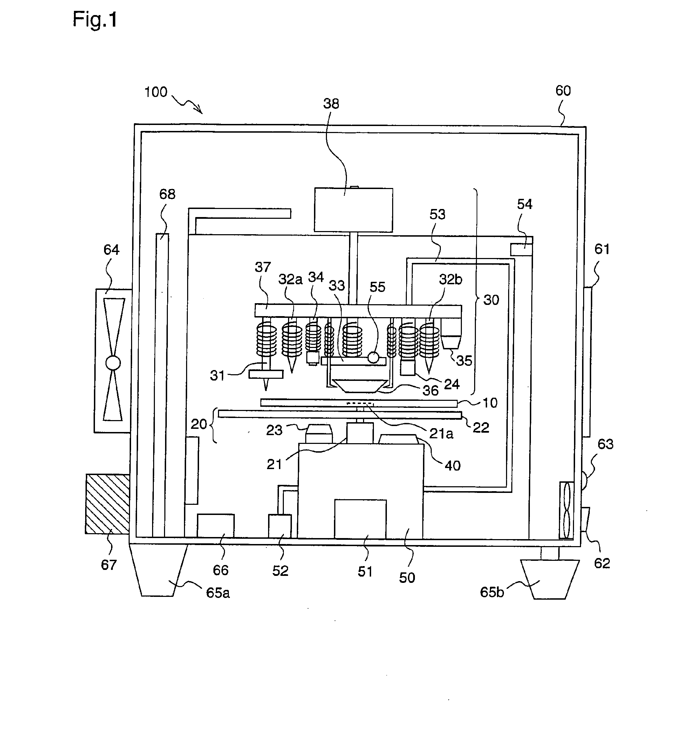

Hereinafter, a biological sample discrimination apparatus according to a first embodiment of the present invention will be described with reference to figures 1~14.

The present invention realizes miniaturization, weight saving, and cost reduction of a biological sample discrimination apparatus in which a biological sample is transferred in a buffer agent to carry out biological, enzymatical, immunological, and chemical assay.

In this first embodiment, in order to specify the description, it is assumed that the biological sample is a DNA sample, and the buffer agent is a DNA conjugate solution which is obtained by adding a DNA bonding control agent such as MgCl₂ and a pH buffer agent that also serves as an electrolyte into a DNA conjugate for separation. The biological sample discrimination apparatus adds a predetermined quantity of the DNA sample into the DNA conjugate solution to make the sample perform electrophoresis, and discriminates presence/absence of SNPs (Single Nucleotide Polymorphism) in the DNA sample.

Figure 1 is a block diagram illustrating the biological sample discrimination apparatus according to the first embodiment.

With reference to figure 1, the biological sample discrimination apparatus 100 is provided with a filling unit 20 for filling the DNA conjugate solution in channels formed on a plate 10, and adding a predetermined amount of the DNA sample in the channels which are filled with the DNA conjugate solution; a discrimination unit 30 for performing pressurization, heating, and voltage application onto the plate 10 to make the DNA sample perform electrophoresis in the DNA conjugate solution, thereby discriminating presence/absence of SNPs; an elevation stage 50 for vertically driving the plate by a vertical drive motor 51; and a control substrate 68 for controlling the operation of the apparatus 100.

Further, in the apparatus 100, the elevation stage 50 is disposed at the bottom of the apparatus, and the filling unit 20 is disposed on the elevation stage 50, and further, the discrimination unit 30 is disposed above the elevation stage 50, whereby the construction of the apparatus is compacted.

Hereinafter, the specific constructions of the respective units will be described.

The filling unit 20 is provided with a high-speed rotation motor 21 for rotating the plate 10 at a high speed; a plate holder 22 for holding the plate 10, which has a portion fixed in this apparatus 100, and moves from inside to outside or from outside to inside of apparatus 100 through a door 61 provided on a casing 60; a plate recognition sensor 23 for recognition presence/absence of the plate before starting measurement; and a pressurization unit 24 for pressurizing the channels to make a difference in pressures in the channels.

The discrimination unit 30 is provided with a fitting pin 231 for fixing the plate 10 to the determination unit 30; positive and negative electrodes 32a and 32b for applying voltage to the channels formed on the plate 10; a heater 33 for keeping the channels at a constant temperature; a positioning mark detection sensor 35 for performing positioning when the plate 10 is fixed to the discrimination unit 30; a clamper 36 for holding the plate 10; a thermistor 34 for detecting the temperature of the channels formed on the plate 10; and a low-speed rotation motor 38 for rotating the plate at a low speed.

In the apparatus 100 according to the first embodiment, in order to make the configuration of the apparatus compact, the pressurization unit 24 which is a constituent of the filling unit 20 as well as the constituents of the discrimination unit 30 are disposed on a sealing plate 37 disposed above the apparatus.

Further, the fitting pin 31, the positive and negative electrodes 32a and 32b, the heater 33, the thermistor 34, the clamper 36, and the pressurization part 24, which are disposed on the sealing plate 37, are provided with springs for giving an appropriate tension to the plate 10, and these elements are pressed against the plate 10 by the springs.

Further, the apparatus 100 of the first embodiment is provided with an optical detector 40 for detecting fluorescence or absorbance of the DNA sample that migrates in the DNA conjugate solution to discriminate the DNA sample that migrates in the DNA conjugate solution. The migration state of the DNA sample in the DNA conjugate is determined from the detection result of the optical detector 40, and presence/absence of SNPs in the DNA sample is discriminated on the basis of the determination result. In this first embodiment, the optical detector 40 is disposed on the elevation stage 50.

Further, the heater 33 is provided with a heater temperature detection sensor 55 for detecting the temperature of the heater 33, and an intra-apparatus temperature detection sensor 54 for detecting the temperature in the apparatus is provided in the apparatus 100.

Furthermore, the biological sample discrimination apparatus 100 is provided with an intra-apparatus temperature detection sensor 54 for detecting the temperature in the apparatus, an a pressurization pump 52 connected to the pressurization part 24 through a pump tube 53, a high-voltage power supply 66, and an apparatus power supply 67. The casing 60 of the apparatus 100 is provided with a power supply switch 62 for controlling on/off of the apparatus 100, an LED 63 which is turned on when the power supply switch 62 is in the ON state, a cooling fan 64 for cooling the inside of the apparatus 100, and a height-adjustable rubber legs 65a and 65b for protecting the apparatus 100 from vibration.

The cooling fan 64 provided on the apparatus 100 performs cooling by taking the outer air into the apparatus 100 or releasing the heated air in the apparatus 100 to the outside. however, since the biological sample discrimination apparatus 100 is for detecting the intensity of light on the plate by the optical detector 40 to obtain the detection result, invasion of light into the apparatus 100 must be avoided. So, in this first embodiment, the cooling fan 64 is provided with a light shielding part which is penetrable to air but impenetrable to light.

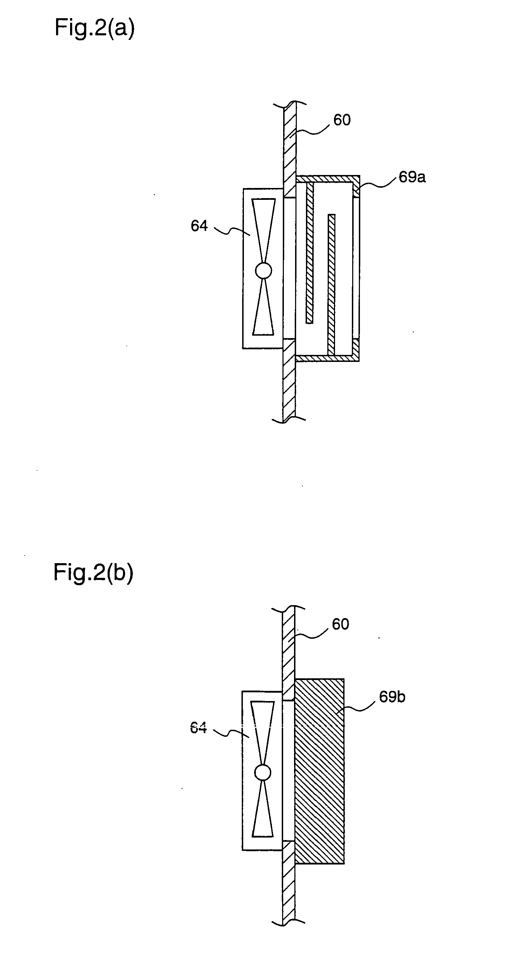

Figure 2 is a cross-sectional view illustrating an example of the light shielding part. As a first example of the light shielding part, a crank-shaped or L-shaped baffle plate 69a that is impermeable to light but sufficiently permeable to air as shown in figure 2(a) may be disposed at the inner side of the casing 60 to which the cooling fan 64 is attached. As a second example, a filter 69b that is impermeable to light but permeable to air as shown in figure 2(b) may be disposed at the inner side of the casing 60 to which the cooling fan 64 is attached. As a material of the filter 69b, there is proposed a material of a porous structure which is obtained by laminating plural porous films or by connecting minute pores with connection tubes.

Next, the plate 10 will be described.

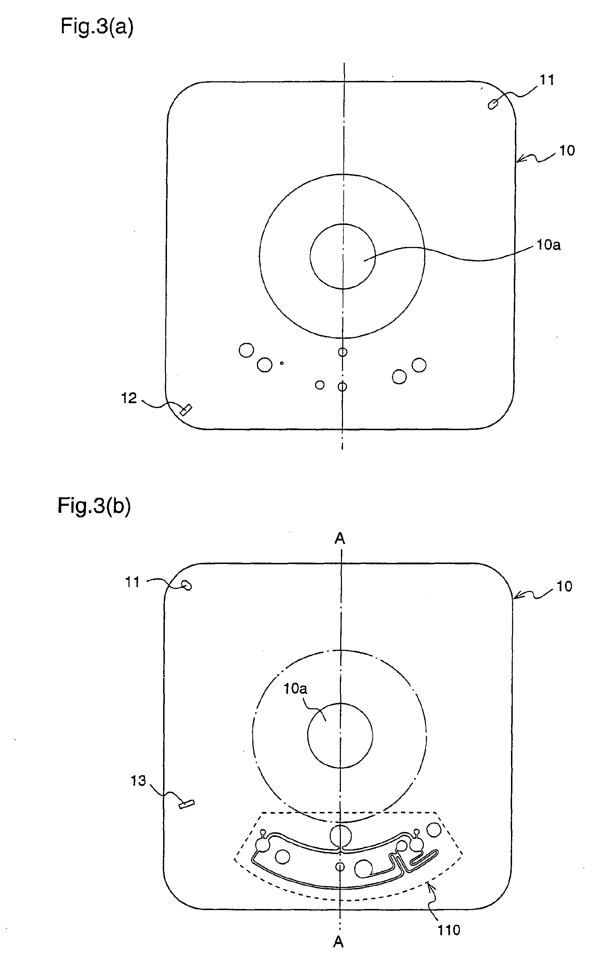

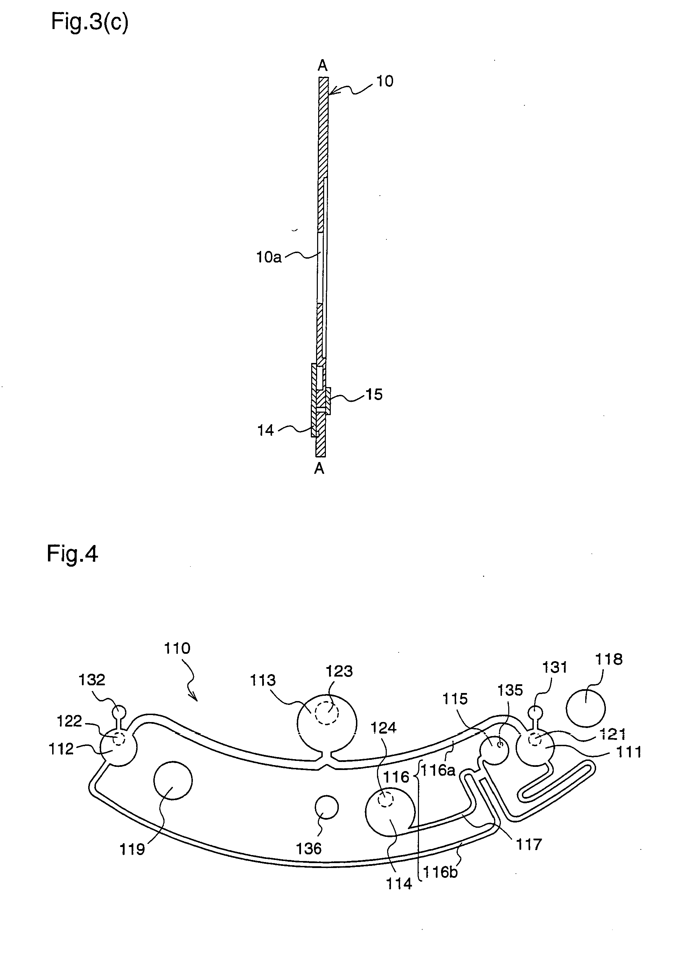

Figure 3(a) shows an upper surface of the plate according to the first embodiment, figure 3(b) shows a lower surface of the plate, figure 3(c) is a A-A cross section of the plate, and figure 4 shows a specific shape of a pattern formed on the plate.

As shown in figure 3(a), the plate 10 of the first embodiment has, in its center, an opening 10a to be used for connecting the plate 10 with a motor or the like when rotating the plate 10, and a fitting pin hole 11 in which a fitting point 31 disposed on the sealing plate 37 of the biological sample discrimination apparatus 100 shown in figure 1 is to be inserted. As shown in figure 3(b), a channel pattern 110 for migrating the DNA sample in the DNA conjugate solution, and a plate recognition mark 13 to be detected by the plate recognition sensor 23 are provided on the lower surface of the plate 10. Further, as sown in figure 3(a), a positioning mark 12 to be detected by the positioning mark detection sensor 35, inlets 123 and 124 through which the DNA conjugate solution and the DNA sample as an analyte are injected, electrode insertion ports 121 and 122 in which the respective electrodes 32a and 32b are inserted, and air holes 131, 132, and 135 are provided on the upper surface of the plate 10.

Further, as shown in figure 3(c), a capillary seal 14 is adhered to the lower surface of the plate 10 so as to seal the channel pattern 110 formed on the plate 10, and a cover film 15 is adhered to the upper surface of the plate 10 so as to seal only the electrode insertion ports. The capillary seal 14 is desired to be transparent because it is necessary to measure the absorbance or fluorescence of the DNA conjugate solution in the channels by the optical detector 40.

Hereinafter, the plate will be described in detail with reference to figure 4.

The channel pattern 110 comprises a first channel 116 which is filled with the DNA conjugate solution, and a second channel 117 which is filled with the DNA sample. The first channel 116 has a round shape comprising an inner circumference channel 116a which is a channel disposed on the inner circumference side of the plate, and an outer circumference channel 116b which is disposed a channel on the outer circumference side of the plate. More specifically, the channel pattern 110 comprises a buffer agent injection part 113 in which the DNA conjugate solution for separating the DNA sample is injected, which is positioned on the inner side of the plate 10 than the inner circumference channel 116a; a sample injection part 114 in which the DNA sample is injected, which is positioned on the inner side of the plate 10 than the second channel 117; a sample pool 115 to which the DNA sample injected into the sample injection part 114 migrates through the second channel; a first electrode insertion part 111 for inserting a negative electrode, and a second electrode insertion part 112 for inserting a positive electrode. The inner circumference channel 116a of the first channel 116 connects the buffer agent injection part 113 and the first electrode insertion part 111, and connects the buffer agent injection part 113 and the second electrode insertion part 112, while the outer circumference channel 116b connected the first electrode insertion part 111 and the second electrode insertion part 112. The second channel 117 connects the second electrode insertion part 112 and the sample pool 115, and includes, in a portion thereof, a quantification part 117a for holding a predetermined amount of DNA sample to be added to the DNA conjugate solution that is filled in the first channel 116, which quantification part 117a is common to a portion of the first channel 116. In the above-mentioned biological sample discrimination apparatus 100, when discriminating presence/absence of SNPs in the DNA sample, the absorbance or fluorescence of the electrophoresis channel which is a portion of the external circumference channel 116b is measured by the optical detection part 40 thereby discriminating presence/absence of SNPs in the quantitatively added DNA sample.

When detecting the fluorescence of the electrophoresis channel by the optical detection unit 40, since the fluorescence detection efficiency is low if the electrophoresis channel is too deep, it is desired that the width of the channel is broad and the depth thereof is shallow. For example, a channel that is 300 µm wide and 50 µm deep may be adopted. On the other hand, when detecting the absorbance of the electrophoresis channel by the optical detection unit 40, since the absorbance is difficult to detect if the electrophoresis channel is too shallow, the channel is desired to be adequately deep. For example, a channel that is 300µm wide and 300µm deep may be adopted. However, considering the separation ability of electrophoresis, the width of the channel is desired to be narrow.

Further, in the channel pattern 110, first and second electrode standby holes 118 and 119 for keeping the electrodes 32a and 32b on standby when measurement is not carried out are provided concentrically with the first and second electrode insertion parts 111 and 112, respectively. Further, a pressurization standby hole 136 for keeping the pressurization part 24 on standby when pressurization by the pressurization part 24 is not carried out is provided concentrically with the sample inlet 114. Further, the first and second electrode insertion parts 111 and 112 are provided with electrode insertion ports 121 and 122 in which the negative electrode 32a and the positive electrode 32b are respectively inserted, and air holes 131 and 132. The buffer agent injection part 113 and the sample injection part 114 are provided with injection ports 123 and 124, respectively, and the sample pool 115 is provided with an air hole 135.

Hereinafter, a description will be given of specific operation and performance of the biological sample discrimination apparatus until presence/absence of SNPs (Single Nucleotide Polymorphism) in the DNA sample is discriminated.

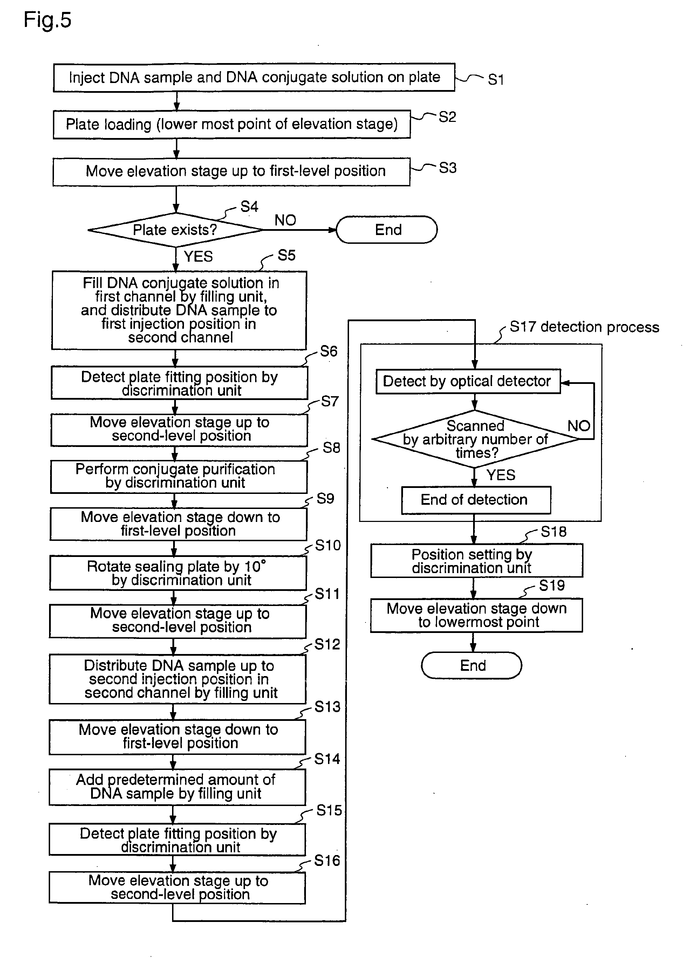

Figure 5 is a flowchart illustrating a series of operations of the biological sample discrimination apparatus according to the first embodiment.

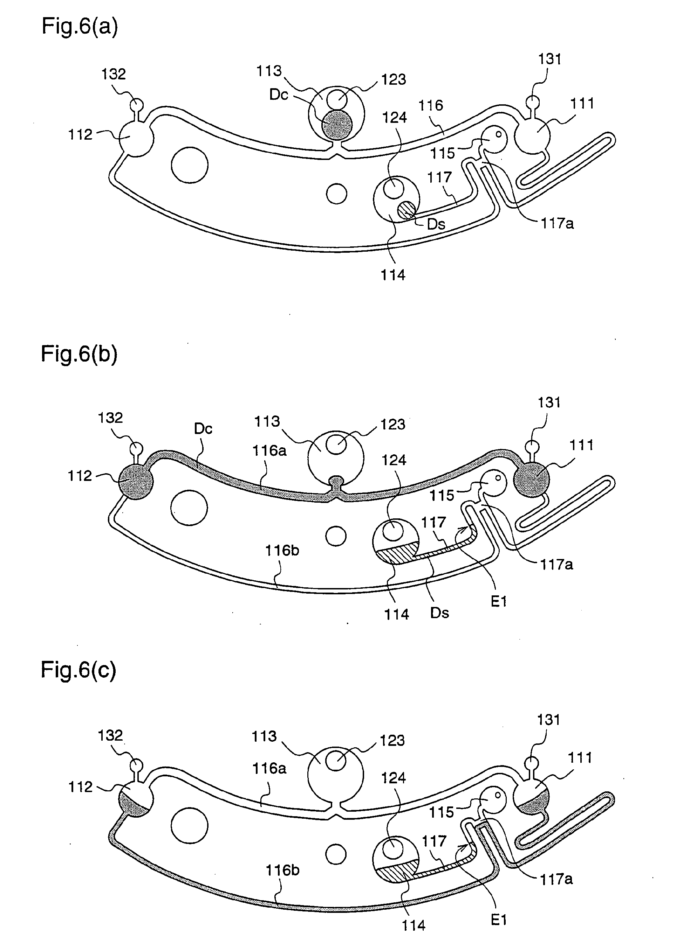

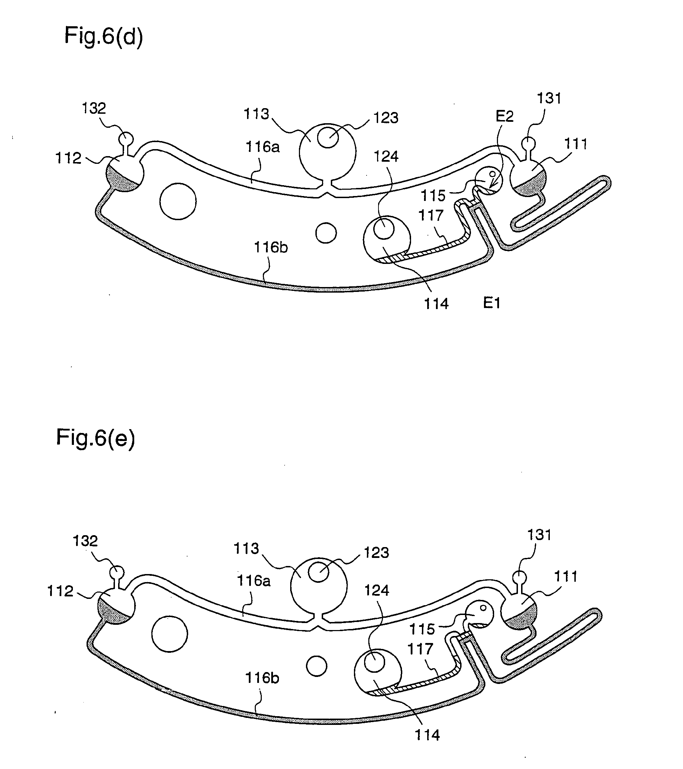

(Step S1) Initially, a DNA sample as an analyte and a DNA conjugate solution are prepared. Then, as shown in figure 6(a), by a manual operation using a syringe, the DNA conjugate solution Dc is injected from the injection port 123 into the buffer agent injection part 113 of the channel pattern 110 formed on the plate 10, and simultaneously, the DNA sample Ds is injected from the injection port 124 into the sample injection part 114.

Fundamentally, DNA has a duplex-strand helical structure. In this first embodiment, however, single-strand DNA having a base length of about 60 bases including SNPs to be discriminated is prepared. Since the methods of extraction and denaturation of DNA are not directly related to the present invention, specific description thereof will be omitted.

The DNA conjugate solution is, as mentioned above, a substance including the DNA conjugate for separation, the pH buffer agent also serving as electrolyte, and the DNA bonding control agent such as MgCl₂.

The DNA conjugate for separation is obtained by covalently bonding a high-molecular linear polymer to a 5' end of single-strand DNA having a base length of 6~12 bases. The single-strand DNA includes a sequence that is complemental to the normal type of DNA including SNPs to be discriminated, but it includes a sequence that is not complemental to the mutant type DNA. That is, the DNA conjugate solution is characterized by that its bonding force to the normal DNA is strong while its bonding force to the mutant DNA is weak. Further, the DNA conjugate solution is characterized by that, when electrophoresis is carried out, the electrophoresis speed is considerably low because the linear polymer bonded to the 5' end acts as a weight.

Hereinafter, a description will be given of an example of a specific method for producing the DNA conjugate solution to be injected into the buffer agent injection part 113.

A DNA conjugate for separation is produced as follows. Initially, 5' end of DNA having a base sequence that is complementary to a base sequence of a DNA sample is aminated (usually, aminated through hexyl), and a sterilized ultrapure water is added to dilute the aminated DNA to 2.6mM. Next, MOSU (methacryloyloxysuccinimide) is diluted with DMSO (demethylsuloxide) to 71.388mM. Thus obtained aminated DNA and MOSU are mixed and adjusted to a ratio of 1/50. Thereafter, a solution that is adjusted by sodium hydrogen carbonate and sodium hydroxide to pH9 is added as a pH adjustment agent to the above-mentioned adjusted solution by an amount equal to the amount of the aminated DNA. The solution obtained as mentioned above is shaken overnight, and then vinyl DNA in the shaken solution is separated from the aminated DNA, the MOSU, and others, by using HPLC (High Performance Liquid Chromatography). Since the vinyl DNA contains an eluting solution (TEAA; a mixture of triethylamine-acetic acid and acetonitrile), it is subjected to vacuum concentration by a centrifugal evaporator having a vacuum drying function. Next, 10% of AAM (acrylamide) as a polymerization solution is subjected to nitrogen substitution by 53 µmol. Further, 1.34% of TEMD (N,N,N',N'- tetramethylethylene diamine) as a polymerization start agent is diluted with a sterilized ultrapure water that is deaerated by supersonic. Then, 1.34% of APS (ammonium persulfate) as a polymerization start agent is also diluted with the sterilized ultrapure water that is deaerated by supersonic. Then, in order to synthesize 100 µl of DNA conjugate for separation, 34 µl of the AAM, 5 µl of the TEMD, and 5 µl of the APS are added so that the vinyl DNA becomes 0.01% mol~0.05% mol with respect to the AAM, and the sterilized ultrapure water is added to be 100 µl. Thus obtained solution is left for about 60 minutes, whereby an acrylamidated DNA conjugate for separation is obtained. Then, a pH buffer agent and a DNA bonding control agent are added to thus obtained DNA conjugate for separation, thereby to produce a DNA conjugate solution.

After the DNA sample or the DNA conjugate solution is prepared as mentioned above, predetermined amounts of DNA sample and DNA conjugate solution are dispensed into the DNA injection part 124 and the buffer agent injection part 123 of the plate 10 by using a pipeter or the like, respectively. Although the amount of dispensation depends on the scale of the pattern, the amount of the DNA conjugate solution is 18 microliters, and the amount of the DNA sample is 2 microliters.

(Step S2) After the DNA conjugate solution or the DNA sample is injected from the respective injection ports of the plate 10 in Step S1, the power supply switch 62 of the apparatus 100 is turned ON, and a plate holder 22 is pulled out of the casing 260 through the door 61 by operating an operation button or the like (not shown), and the plate 10 into which the DNA conjugate solution Dc and the DNA sample Ds are injected is set on the plate holder 22. Thereafter, the plate holder 22 is drawn into the casing 60 by operating the operation button again. Thus, plate loading is completed. When the plate holder 22 is drawn in the casing 60 by the operation of Step S2, the plate 10 is automatically set in a position where the opening 10a is fitted to the plate receiving part 21a of the high-speed rotation motor 21. It is assumed that the position of the elevation stage 50 in this state is the lowermost point.

(Step S3) Simultaneously with the above-mentioned loading of the plate 10 into the biological sample discrimination apparatus 100, the elevation stage 50 goes up from the lowermost point to the first-level position where the plate 10 is held by the clamper 36, by the vertical drive motor 51. At this time, the optical detector 40, the high-speed rotation motor 21, the plate recognition sensor 23, and the plate 10 that is fitted in the plate receiving part 21a of the high-speed rotation motor 21 also move up with the elevation stage 50, while the plate holder 22 does not move because it is fixed to the apparatus. Thereby, the plate 10 can be fixed to the motor or the like in the apparatus with the gravity center of the plate in the center.

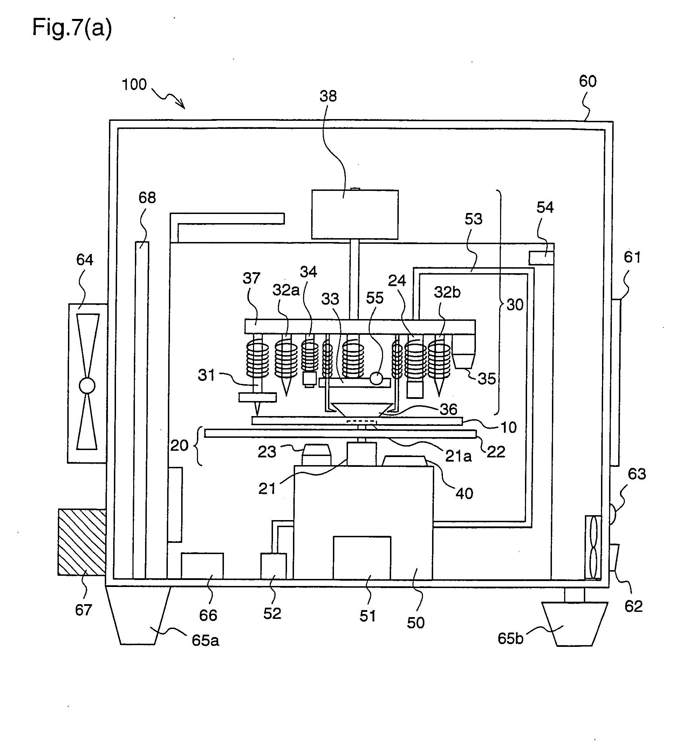

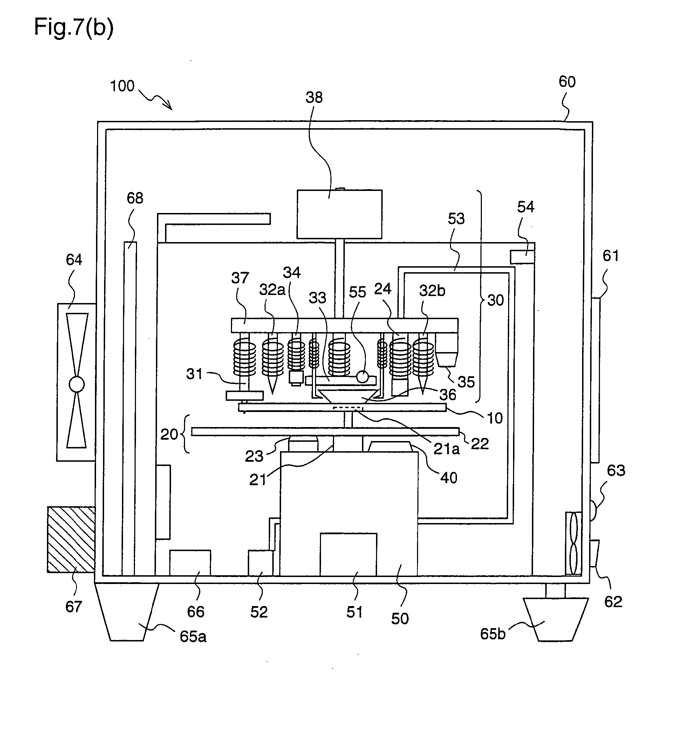

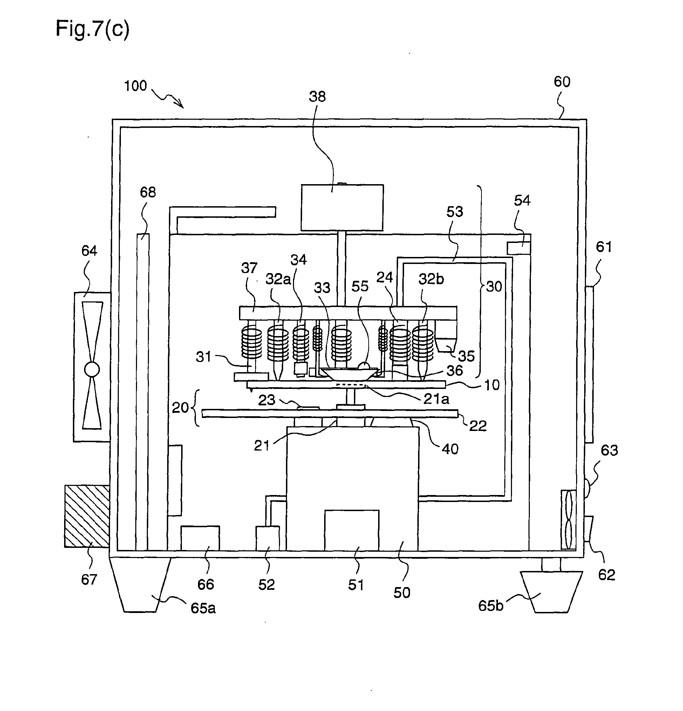

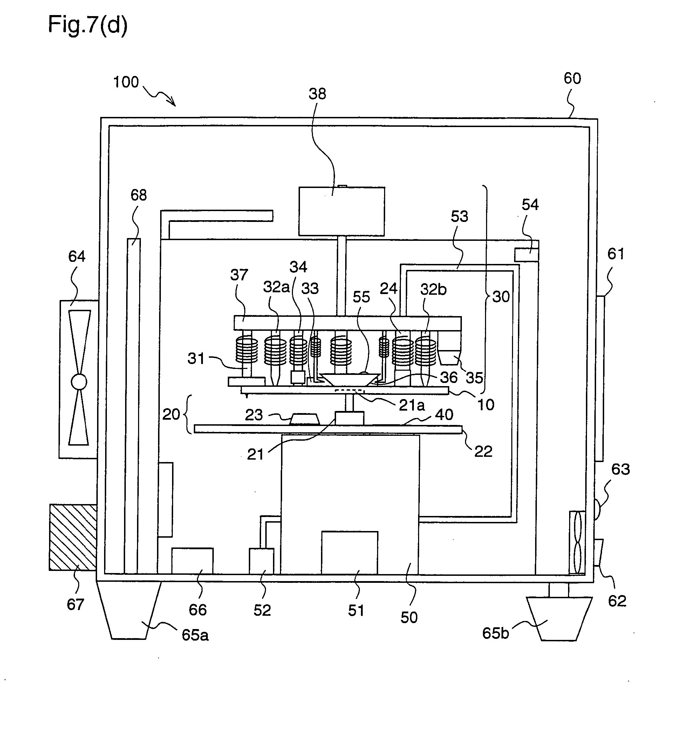

Figure 7(a) shows the state where the elevation stage 50 of the biological sample discrimination apparatus of the first embodiment goes up to the first-level position.

Hereinafter, the operation until the plate 10 is held by the clamper 36 will be described in detail. Initially, simultaneously with loading of the plate 10 in the biological sample discrimination apparatus 100, the elevation stage 50 starts to go up from the lowermost point by the vertical drive motor 51, and the opening 10a of the plate 10 is fitted to the plate receiving part 21a of the high-speed rotation motor 21 as shown in figure 1. Thereafter, the elevation stage 50 further goes up, and the plate 10 goes up together with the high-speed rotation motor 21. When the elevation stage 50 reaches a certain position, a magnet disposed on the lower surface of the clamper 36 that is positioned above the plate 10 is connected to the plate receiving part 21a of the high-speed rotation motor 21, which is formed of a metal, whereby the plate 10 is held by the clamper 36. When the plate 10 is thus connected to the plate receiving part 21a, the elevation stage 50 stops, and this stop position is the first-level position of the elevation stage 50. For example, the first-level position is 8mm higher than the lowermost point of the elevation stage 50.

(Step S4~Step S5) After the elevation stage 50 moves to the first-level position as described above, the process of filling the first channel 116 with the DNA conjugate solution at this first-level position by the filling unit 20. At this time, before performing the filling process, it is checked whether the plate 10 exists in the apparatus or not.

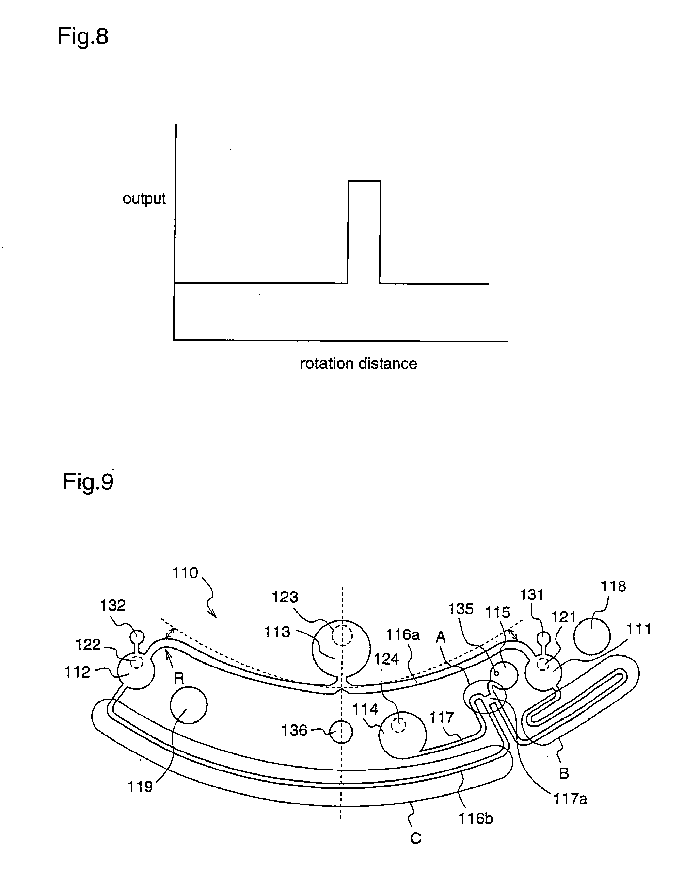

The recognition as to whether the plate 10 exists or not is carried out by detecting the plate recognition mark 13 disposed on the lower surface of the plate 10 using the plate recognition sensor 23. The plate recognition mark 213 of the plate 10 is a notch, a mark, or the like. For example, an aluminum tape is attached in this embodiment. When the plate 10 is rotated by the high-speed rotation motor 21, the lower surface of the plate 10 is checked with the plate recognition sensor 23 which is a reflection type photosensor or the like. At this time, since there is a difference in output signals between the aluminum tape as the plate recognition mark 13 and a part other than the aluminum tape as shown in figure 8, the plate recognition sensor 23 determines that the plate 10 exists when the output signal has a rising edge and a falling edge, while it determines that no plate 10 exists when the output signal has neither a rising edge nor a falling edge.

When it is determined by the plate recognition sensor 23 that there is no plate 10, the operation is ended at this point in time. On the other hand, when it is determined that there is a plate 10, the high-speed rotation motor 21 of the filling unit 20 is rotated at a predetermined rpm, e.g., about 4000rpm, for 1 ~2 minutes, whereby the first channel 116 of the channel pattern is filled with the DNA conjugate solution.

Hereinafter, how the channel pattern 110 is filled with the DNA conjugate solution will be described with reference to figures 6(a)~6(c).

Initially, when the plate 10 is rotated at a high speed by the high-speed rotation motor 21, as shown in figure 6(a), the DNA conjugate solution injected into the buffer agent injection part 113 in the channel pattern 110 migrates from the buffer agent injection part 113 through the inner circumference channel 116a of the first channel 116 to reach the first and second electrode insertion parts 111 and 112 as shown in figure 6(b) due to a centrifugal force generated by the high-speed rotation. Further, the DNA conjugate solution migrates from the first and second electrode insertion parts 111 and 112 through the outer circumference channel 116b of the first channel 116, and finally, it is filled in the first and second electrode insertion parts 111 and 112 and the outer circumference channel 116b, as shown in figure 6(c). This DNA conjugate solution is smoothly filled in the outer circumference channel 116b because the air originally existing in the outer circumference channel 116b is discharged from the air hole 135 of the sample pool 115.

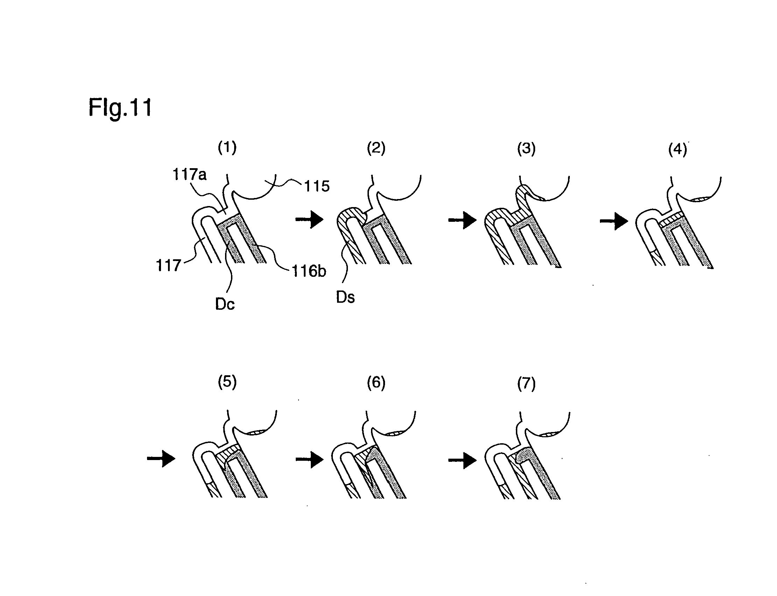

In the above-mentioned conjugate filling process, the reason why the DNA conjugate solution is prevented from being filled in the inner circumference channel 116a of the first channel 116 is because electrophoresis should not be carried out on the inner circumference channel 116a side when the electrodes are inserted in the first and second electrode insertion parts 111 and 112 and voltage is applied thereto. Accordingly, in Step S1, the amount of the DNA conjugate solution injected into the buffer agent injection part 113 is desired to be set so that the DNA conjugate solution does not remain in the inner circumference channel 116a after the conjugate filling process. Further, in the following steps, it is necessary to make the DNA sample flow into the quantification part 117a having a portion that is common to the outer circumference channel 116b. Accordingly, the amount of the DNA conjugate solution injected into the buffer agent injection part 113 must be set so that the channel of the quantification part 117a is not filled with the DNA conjugate solution, and particularly, the amount should be preferably lower than half the height of the channel of the quantification part 117a as shown in figure 11(1)~ (4). This is because the DNA conjugate solution undesirably spills out toward the second channel 117 if the amount of the DNA conjugate solution exceeds half the height of the channel of the quantification part 117a. In this first embodiment, the amount of the DNA conjugate solution is about 18 microliters.

On the other hand, the DNA sample injected into the sample injection part 114 migrates in the second channel 117 along the circumference direction due to a centrifugal force generated by the filling unit 20, and is distributed into a portion of the second channel 117, during the conjugate filling process by the filling unit 20. Also the DNA sample is smoothly distributed into the portion of the second channel 117 because the air originally existing in the outer circumference channel 116b or the second channel 117 is discharged from the air hole 135 of the sample pool 115.

At this time, if the amount of the DNA sample injected into the sample injection part 114 is large, the DNA sample undesirably flows into the quantification part 117a before the DNA conjugate solution is filled in the outer circumference channel 116b of the first channel 116 in the conjugate filling process by the filling unit 20, and consequently, the DNA sample undesirably flows into the outer circumference channel 116b. Accordingly, the amount of the DNA sample to be injected into the sample injection part 114 should be set so as not to reach the outer circumference channel 116b by a centrifugal force, i.e., so that the migration of the DNA sample stops in the middle of the second channel 117, more specifically, at a position E1 (hereinafter referred to as "first injection position") as shown in figures 6(b) and 6(c).

The DNA sample is not required to have an amount that fills the entirety of the second channel 117, but it is only required to have an amount that fills a portion of the second channel 117, i.e., the quantification part 117a, and therefore, the amount thereof may be small. In this first embodiment, the amount of the DNA sample is about 2 microliters.

Now, the feature of the shape of the channel pattern 110 formed on the plate 10 will be described in detail. Figure 9 is a diagram illustrating an example of a channel pattern formed on the plate of the first embodiment.

In order to obtain an accurate detection result by making the DNA sample perform electrophoresis in the electrophoresis channel C which is a portion of the external circumference channel 116b in the channel pattern 110 provided on the plate 10, it is necessary to prevent generation of bubbles in the outer circumference channel 116b. According, in the channel pattern 110 of the first embodiment, various schemes are made to prevent bubbles from being contained in the outer circumference channel 116b when the DNA conjugate solution and the DNA sample are injected, or when the quantity of the DNA sample is determined, or when the predetermined quantity of the DNA sample is added to the DNA conjugate solution.

Hereinafter, these schemes will be described specifically. The first feature of the channel pattern 110 resides in the shape of the buffer agent injection part 113 and the position where it is disposed.

In this first embodiment, as shown in figure 9, the buffer agent injection part 113 is positioned inner than the first channel 116, and its outlet port branches into two, whereby the DNA conjugate solution branches so as to migrate toward both ends of the inner circumference channel 116a. Therefore, when the DNA conjugate solution is injected into the buffer agent injection part 113, it branches into two at the outlet port of the buffer agent injection part 113 and smoothly migrates toward the both ends of the inner circumference channel 116a in short time, by a centrifugal force toward the outer circumference that is generated by the high-speed rotation of the plate 10, and then passes through the first and second electrode insertion parts 111 and 112 to be filled in the outer circumference channel 116b from the both ends of the channel 116b. Therefore, the DNA conjugate solution can be reliably filled in the outer circumference channel without containing bubbles. Of course, the same effect as mentioned above can be achieved even when two buffer agent injection parts are provided at both ends of the first channel to inject the DNA conjugate solution from the two parts. In this first embodiment, since one buffer agent injection part 113 is disposed on the inner circumference channel 116a side and the outlet of the buffer agent injection part 113 is branched into two, it is not necessary to perform injection of the DNA conjugate from the both ends of the channel, whereby it becomes unnecessary to control the timing of injecting the buffer agent from the both ends of the first channel 116, and the amount of injection. Thereby, it is possible to prevent errors in measurement which may occur due to control of the injection timing and amount of the DNA conjugate solution. Further, in the case where the buffer agent injection part 113 is provided in the first channel 116, it is provided in the center of the inner circumference channel 116a as shown in figure 9. Therefore, when the DNA conjugate solution is filled in the outer circumference channel 116b, it is possible to prevent occurrence of bubbles in the outer circumference channel 116b, which is caused by that the DNA conjugate solution is unevenly injected into the first channel 116.

The second feature resides in the positions where the first and second electrode insertion parts 111 and 112 are disposed.

In this first embodiment, as shown in figure 9, the electrode insertion parts 111 and 112 are disposed in portions of the first channel 116 along its radial direction. Thereby, no bubbles are included in the respective electrode insertion parts 111 and 112 when the DNA conjugate solution is filled by centrifugal force. For example, if the respective electrode insertion parts 111 and 112 are disposed in portions of the first channel 116 along its circumferential direction, since the solution injected in the first channel 116 migrates in the radial direction by centrifugal force, resulting in a possibility that bubbles might occur in the respective electrode insertion parts.

The third feature resides in the sizes of corners R of the first and second channels 116 and 117.

In this first embodiment, the curvatures of the corners R of the first and second channels 116 and 117 in the channel pattern 110 are set at 0.5 or more, whereby no bubbles are contained in all the corner portions of the first and second channels 116 and 177 when the DNA conjugate solution is filled by centrifugal force toward the outer circumference that occurs due to rotation of the plate.

The fourth feature resides in the shape of the inner circumference channel 116a.

The inner circumference channel 116a of the first embodiment is, as shown in figure 9, is formed not concentrically but ellipsoidally so as to deviate toward the outer circumference with distance from the respective electrode insertion parts 111 and 112. Thereby, when the DNA conjugate solution is filled in the first channel 116, it is possible to prevent that the DNA conjugate solution stops in the middle of the channel or bubbles are contained in the channel, by centrifugal force that occurs due to high-speed rotation of the plate. Furthermore, since the width of the inner circumference channel 116a is larger than that of the outer circumference channel 116b, the DNA conjugate solution can be transferred in a short time from the buffer agent injection part 113 to the first and second electrode insertion parts 111 and 112, whereby elimination of bubbles can be enhanced, and further, the DNA conjugate solution filling time can be shortened.

The fifth feature resides in the shape of a portion A of the second channel 117.

In this first embodiment, in the quantification part 117a included in the second channel 117 shown in figure 9, a portion of the second channel 117 is common to a portion of the outer circumference channel 116b. In the common channel portion, a predetermined quantity of DNA sample is determined in the common channel portion, and simultaneously, the predetermined quantity of DNA sample is added to the DNA conjugate solution filled in the outer circumference channel 116b. The quantification part 117a in the second channel 117 is disposed at the inner side of the plate than the outer circumference channel 116b.

For example, in the first embodiment, as shown in figure 9, an approximately U shape comprising the radial direction portion of the plate 10 and the circumference direction portion of the plate 10 is produced, and the quantification part 117a is disposed in the circumference direction portion of the U shape, thereby making the DNA conjugate solution and the predetermined quantity of DNA sample contact in parallel with each other.

Further, in this first embodiment, a portion of the second channel 117 between the sample pool 115 and the quantification part 117a is shortened, the DNA conjugate solution is prevented from flowing into the sample pool 115 during the process of adding the predetermined quantity of DNA sample, and further, escape of bubbles that occur in the second channel 117 is enhanced.

Further, in this first embodiment, since the sample injection part 114 is positioned inner than the second channel 117 as shown in figure 9, the DNA sample injected into the sample injection part 114 can be smoothly transferred to the second channel in a short time.

In this first embodiment, as shown in figure 9, a bent portion B is provided in the outer circumference channel 116b to adjust the length of the channel from the both ends of the outer circumference channel 116b. For example, if the channel length from the first electrode insertion part 111 to the quantification part 117a is significantly different from the channel length from the second electrode insertion part 112 to the quantification part 117a, e.g., if the length of the B portion is short, bubbles may occur in the outer circumference channel 116b.

The seventh feature resides in that the first and second electrode insertion parts 111 and 112 and the sample pool 115 have air holes, respectively.

The DNA conjugate solution injected into the buffer agent injection part 113 can be filled in the outer circumference channel 116b without generating bubbles by a centrifugal force due to high-speed rotation, because air can be released from the air holes 131 and 132 provided in the first and second electrode insertion parts 111 and 112. Further, since the DNA sample that is filled in the second channel 116b by pressurization with the pressurization part 24 is subjected to air releasing by the air hole 135 provided in the sample pool 115, the distribution area of the DNA sample can be dispersed to the quantification part 117a and the other portion, for example, the sample pool 115 or the sample injection part 114, by centrifugal force due to high-speed rotation. Thereby, it is possible to add a predetermined quantity of DNA sample to the DNA conjugate solution.

The eighth feature resides in that, as shown in figure 3(c), cover films 15 are attached to the electrode insertion ports 121 and 122 of the first and second electrode insertion part 111 and 112.

Thereby, when the plate is rotated at high speed during the conjugate filling process, it is avoided that the DNA conjugate solution scatters and runs out, and thereby no DNA conjugate is filled in the outer circumference channel 116b.

It is not necessary to apply cover films 15 on the injection ports 123 and 124 of the buffer agent injection part 113 and the sample injection parts 114. The reason is as follows. Since the injection ports 123 and 124 of the buffer agent injection part 113 and the sample injection part 114 are disposed on the inner circumference side of the plate as shown in figure 4, the sample migrates to the outer circumference side of the plate by centrifugal force when the plate is rotated at high speed, and therefore, the DNA conjugate solution and the DNA sample do not scatter out of the respective injection parts 113 and 114.

(Step S6) After the DNA conjugate solution or the DNA sample is injected into the plate 10 having the above-mentioned characteristics and the process of filling the DNA conjugate solution by the filling unit 20 is completed in step S5, the elevation stage 50 is further moved up so as to fit the plate 10 to the discrimination unit 30. However, in order to fit the discrimination unit 30 to the plate 10, the fitting pin 31 of the discrimination unit 30 must be inserted in the fitting pin hole 11 of the plate 10. Therefore, it is necessary to perform positioning of the plate 10 in order to detect the position of the fitting pin hole 11 of the plate 10.

So, in this first embodiment, the positioning mark 12 is provided on the upper surface of the plate 10 as shown in figure 3(a), and the positioning mark 12 is detected by the positioning mark detection sensor 35 to determine a position where the discrimination unit 30 can be fitted to the plate 10. When the high-speed rotation motor 21 of the filling unit 20 is a servo type motor, since the position of the plate 10 after the high-speed rotation during the conjugate filling process can be limited, it is not necessary to perform positioning of the plate 10.

The fitting position detection method by the discrimination unit 30 is identical to the operation in step S4. That is, when rotating the discrimination unit 30 by the low-speed rotation motor 38, the upper surface of the plate 10 is measured by the positioning mark detection sensor 35 such as a reflection type sensor. At this time, as shown in figure 8, a difference in output signals occurs between the mark portion where the positioning mark 12 exists and a portion other than the mark portion, and positioning of the discrimination unit 30 is determined by observing a rising edge and a falling edge of the output signal. When performing positioning by rotating the discrimination unit 30 with the low-speed rotation motor 38, the discrimination unit 30 has many components disposed on the sealing plate 37, and cables and tubes (not shown) of the components are rolled up in the vicinity of the discrimination unit 30. Therefore, in order to prevent the cables and tubes from being tangled, the discrimination unit 30 is turned by half or 3/4 from the right to the left to detect the position thereof, and thereafter, the discrimination unit 30 is rotated in the direction of less rotation angle to perform positioning of the discrimination unit 30.

(Step 7) After positioning of the discrimination unit 30 is carried out as described above, in order to fit the plate 10 to the discrimination unit 30, the elevation stage 50 is moved up from the first-level position shown in figure 7(a) to the second-level position shown in figure 7(d) by the vertical drive motor 51.

Hereinafter, the state until the plate 10 is fitted to the discrimination unit 30 will be described in detail with reference to figures 7(b)~7(d).

Initially, the fitting pin 31 of the discrimination unit 30 starts to be inserted in the fitting pin hole 11 of the plate 10 (figure 7(b)), and next, the electrodes 32a and 32b of the discrimination unit 30 are inserted in the electrode inlets 121 and 122 of the first and second electrode insertion parts 111 and 112 of the plate 10, and then the pressurization part 24 contacts the pressurization standby hole 136 of the plate 10 (figure 7(c)), and thereafter, the elevation stage 50 goes up until the heater 33 contacts the plate 10. As the result, the fitting pin 31, the electrodes 32a and 32b, the pressurization part 24, the heater 33, and the thermistor 34 are pressed against the plate 10, whereby the discrimination unit is fitted to the plate 10. Accordingly, as shown in figure 7(d), the position of the elevation stage 50 where the discrimination unit 30 is fitted to the plate 10 is the second-level position. For example, the second-level position of the elevation stage is 6.8mm higher than the first-level position shown in figure 7(a).

After the elevation stage 50 moves up to the second-level position and the plate 10 is fitted to the respective components of the discrimination unit 30, the temperature of the outer circumference channel 116b is measured by the thermistor 34, and the heater 33 is controlled according to the measurement result so as to keep the outer circumference channel 116b at a predetermined temperature. The reason why the outer circumference channel 116b is kept at a predetermined temperature is because it is necessary to keep the temperature condition constant when detecting absorbance and fluorescence in the channel by the optical detector 40. The predetermined temperature may be a constant temperature higher than room temperature. The above-mentioned temperature is determined according to the DNA conjugate solution to be filled and the DNA sample to be added to the DNA conjugate solution. For example, when the DNA sample comprises 40-60 bases and the DNA sequence of the DNA conjugate solution, which has a sequence that is complementary to the target DNA to be detected, comprises 6-8 bases, the temperature of the outer circumference channel is desired to be 25°C~45°C. The temperature of the outer circumference channel 116b is controlled by the thermistor 34 provided on the sealing plate 37.

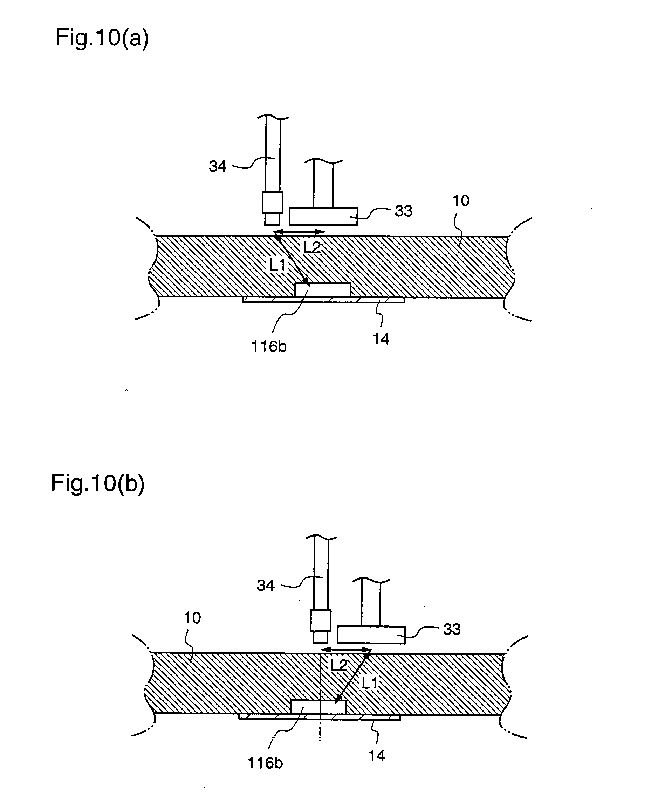

The setting positions of the heater 33 and the thermistor 34 with respect to the outer circumference channel 116b are as follows. For example, as shown in figure 10(a), the heater 33 is disposed directly above the outer circumference channel 116b, and the thermistor 34 is disposed in a position beside the heater 33, wherein distances L1 and L2 shown in figure 10(a) are equal to each other. The heater 33 is pressed to the outer circumference channel 116b to perform heating laconically, the temperature of the plate 10 is measured by the thermistor 34, and the temperature of the outer circumference channel 116b is estimated from the measurement result to control the heater 33. Alternatively, as shown in figure 10(b), the heater 33 may be disposed in a position beside the outer circumference channel 116b, wherein distances L1 and L2 shown in figure 10(b) are equal to each other, while the thermistor 34 may be disposed directly above the outer circumference channel 116b, and the heater 33 is controlled while measuring the accurate temperature of the outer circumference channel 116b by the thermistor 34. Furthermore, the rise in temperature of the heater may be measured by a heater temperature detection sensor (not shown) disposed on the heater 33. In this case, the amount of heat transfer from the heater 33 to the plate 10 is previously measured, and a difference in temperature between the plate 10 and the heater 33 is measured to control the temperature of the outer circumference channel 116b.

(Step S8) After the outer circumference channel 116b is set at a predetermined temperature by controlling the heater 33 as described above, the voltage supplied from the high-voltage power supply 66 is applied to the electrodes 32a and 32b disposed on the sealing plate 37, thereby performing conjugate purification. At this time, the voltage applied to the outer circumference channel 116b is about 0.5KV~5KV. Preferably, it is 1KV~1.5KV.

The purpose of performing conjugate purification by applying voltage to the DNA conjugate solution in step S7 is to remove defects (unreacted DNA and conjugate of small molecular size included in the DNA conjugate solution) which occur during fabrication of the DNA conjugate solution, thereby to obtain pure DNA conjugate solution. The unreacted DNA and the conjugate of small molecular size which are removed at this time are transferred to and stored in the second electrode insertion part 112 into which the positive electrode is inserted.

(Step 59~Step S12) After the conjugate purification is ended, the DNA sample that has been distributed up to the first flow position E1 in the second channel 117 in step S5 is distributed up to the second flow position E2 including the quantification part 117a, by the filling unit 20.

This process is carried out as follows. For example, the pressurization part 24 is brought into contact with the injection port 124 of the sample injection part 114, and the DNA sample stored in the second sample injection part 114 is pressurized from the sample inlet 124.

Accordingly, in this first embodiment, in order to bring the position of the pressurization part 24 to above the injection port 124 from above the pressurization standby hole 136 where the pressurization part 24 currently exists, the elevation stage 50 is once moved down to the first-level position from the second-level position, and the discrimination unit 30 is slightly rotated by the low-speed rotation motor 38, about 10 degrees in this embodiment, and thereafter, the elevation stage 50 is moved up to the second-level position. Thereby, when the elevation stage 50 is moved up to the second-level position to perform pressurization, the pressurization part 24 can be brought into contact with the injection port 124 of the sample injection part 114.

At this time, since the electrodes 32a and 32b are also rotated simultaneously, the electrode 32a and the electrode 32b are inserted in the first and second electrode standby holes 118 and 119 which are disposed concentrically with the first and second electrodes insertion part 111 and 112, respectively.

In the state where the electrodes 32a and 32b stand by in the first and second electrode standby holes 118 and 119, respectively, the sample injection part 114 in which the DNA sample is stored is pressurized by the pressurization part 24.

By this pressurization process, the DNA sample which has been centrifugally distributed in only the circumference direction of the second channel 117 from the second electrode insertion part 112 in the DNA conjugate solution filling process in step S5 as shown in figures 6(b) and 6(c), can be transferred in the radiation direction of the second channel 117 as shown in figure 6(d), and a portion of the DNA sample is transferred up to the sample pool 115, whereby the DNA sample can be filled in the second channel 117.

After the pressurization process in step S12, the elevation stage 50 is moved down from the second-level position to the first-level position (step S13). Then, using the filling unit 20, the DNA sample filled in the second channel 117 is separated so as to leave a portion thereof in the quantification part 117a, and a predetermined amount of DNA sample is supplied to a part of the outer circumference channel 116b which is filled with the DNA conjugate solution, by a centrifugal force (step S14).

For example, the plate 10 is rotated at a predetermined rpm (about 4000rpm in this embodiment) for about 10 seconds by the high-speed rotation motor 21 of the filling unit 20, whereby the DNA sample which is filled in the second channel 117 between the sample injection part 114 and the sample pool 115 as shown in figure 6(d) is left in only the quantification part 117a by centrifugal force caused by the high-speed rotation as shown in figure 6(e). Thereby, a predetermined amount of DNA sample can be added to the DNA conjugate solution that is filled in the external circumference channel 116b.

The migration states of the DNA sample described above are shown in (1)~(4) in figure 11. Figure 11-(1) shows the state where the DNA conjugate solution filling process is ended, in which no DNA sample exists in the area filled with the DNA conjugate solution, migration of the DNA sample is stopped at the first flow position E1 in the second channel 117, and the DNA sample is centrifugal-distributed to the second channel 117. Thereafter, when pressurization is performed by the pressurization part 24, the DNA sample that is centrifugal-distributed in the second channel 117 as shown in figure 11-(2) migrates into the sample pool 115 as shown in figure 11-(3), whereby the DNA sample is filled in the second channel 117. Then, the plate 10 is rotated at a high speed by the high-speed rotation motor 21, whereby, as shown in figure 11-(4), a predetermined amount of the DNA sample is added into the quantification part 117a of the second channel 117 such that the DNA sample contacts the DNA conjugate solution in parallel.

(Step S15) Thereafter, in order to perform measurement by the discrimination unit 30, the elevation stage 50 must be moved up from the first-level position to the second-level position by the vertical drive motor 51. At this time, like the process in step S7, the positioning mark 12 provided on the upper surface of the plate 10 is detected by the positioning mark detection sensor 35, thereby performing positioning of the plate 10. Since the specific operation for the positioning is identical to the operation in step S6, repeated description is not necessary.

(Step S16~Step S17) After the positioning of the plate 10, the elevation stage 50 is moved up to the second-level position by the vertical drive motor 51, and the fitting pin 31 of the sealing plate 37 is inserted in the fitting pin hole 11 of the plate 10 to fit the sealing plate 37 to the plate 10. Thereby, the heater 33 is disposed on the outer circumference channel 116b while the electrodes 32a and 32b are inserted in the electrode insertion parts 111 and 112, respectively. Thereafter, the outer circumference channel 116b is heated to a predetermined temperature by the heater 33, and a voltage of several hundreds V supplied from the high-voltage power supply 66 is applied to the electrodes 32a and 32b to make the DNA sample perform electrophoresis in the outer circumference channel 116b that is filled with the DNA conjugate solution. At this time, an electric field is generated in the outer circumference channel 116b and in the quantification part 117a included in the second channel 117, and the DNA sample Ds that remains by the predetermined amount in the quantification part 117a migrates in the outer circumference channel 116b toward the positive electrode insertion part 112 for the positive electrode. Then, optical detection for detecting the absorbance or the fluorescence of the outer circumference channel 116b by the optical detection unit 40 is carried out.

The states of the DNA sample are shown in (5)~(8) in figure 11. Figures 11-(5)~(8) show the states where voltage application is started and the DNA sample performs electrophoresis in the DNA conjugate solution that is filled in the outer circumference channel 116b.

As described above, even when the DNA sample is just contacted to the DNA conjugate solution in parallel with each other without mixing the DNA sample into the DNA conjugate solution by agitation, it is possible to make the DNA sample migrate in the DNA conjugate solution by electrophoresis by only applying a voltage to the outer circumference channel 116b.

Detection of the absorbance or fluorescence by the optical detection part 40 is carried out as follows. That is, the plate 10 which is fitted to the sealing plate 37 is rotated by the low-speed rotation motor 38 with respect to the optical detection part 40 disposed above the elevation stage 50, and the absorbance or fluorescence of the electrophoresis channel portion C of the outer circumference channel 116b is detected at predetermined intervals, for example, every one minute from start of the measurement. In order to indicate that measurement is being carried out, a second LED (not shown) is turned on simultaneously with the voltage application to the electrodes 32a and 32b, whereby the door 61 of the apparatus 100 is prevented from being opened by mistake during the measurement.

Further, detection of the absorbance or fluorescence by the optical detection part 40 is carried out as follows. That is, the operation of rotating the fitted plate 10 and sealing plate 237 about one time and then rotating these plates back to the initial position, is repeated by the low-speed rotation motor 38, and the electrophoresis channel C of the outer circumference channel 116b in the pattern 110 is scanned by the optical detection unit 40 during the rotation, thereby measuring the absorbance or fluorescence of the electrophoresis channel C. The scanning of the electrophoresis channel C by the optical detection part 40 is performed only in the direction along which the DNA sample migrates in the DNA conjugate solution, and no scanning is carried out in the opposite direction.

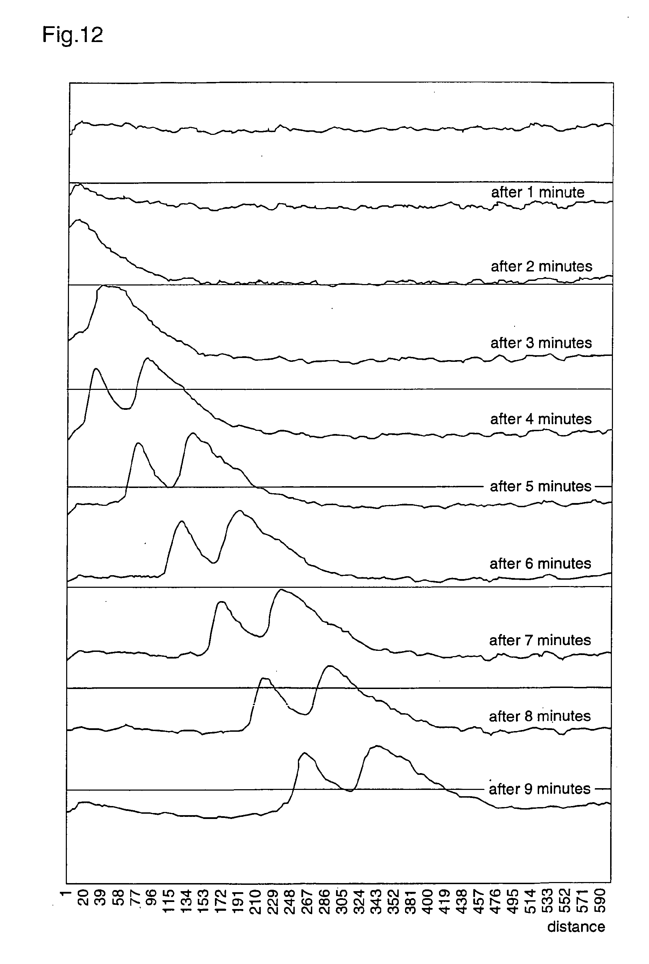

Figure 12 is a diagram illustrating the detection result obtained when the DNA sample in the electrophoresis channel is detected by utilizing the absorbance (260nm) in the biological sample discrimination apparatus 100 according to the first embodiment. In figure 12, a DNA conjugate solution obtained by mixing a solution in which 0.5mM of magnesium chloride as a DNA bonding control agent is added to 10mM of Tris-Borate buffer solution, and a DNA conjugate for separation (conjugate 5'-TAACGGT-3') is filled in the outer circumference channel 116, and a labeled DNA sample including mutant DNA (5'-ATGTGGAACCTTTACTAAAG-3') and wild DNA (5'-ATGTGGAACCGTTACTAAAG-3') is injected into the outer circumference channel 116b, thereby to make the DNA sample perform electrophoresis in the electrophoresis channel C in the outer circumference channel 116b.

In figure 12, the abscissa shows the distance along which the DNA sample migrates in the electrophoresis channel C in the outer circumference channel 116b. In figure 12, the DNA sample migrates from left to right of the graph.

That is, the left side in figure 12 is the quantification unit 117a side of the electrophoresis channel C in the outer circumference channel 116b, and the right side is the positive electrode insertion part 112 side of the electrophoresis channel C. Further, the ordinate shows the absorbance, illustrating the waveform that changes with time for every one minute from the top.

With reference to figure 12, it is found that one peak is gradually separated into two peaks. From this waveform diagram, it is determined that approximately equal quantities of mutant DNA and wild DNA exist in the DNA sample as an analyte.

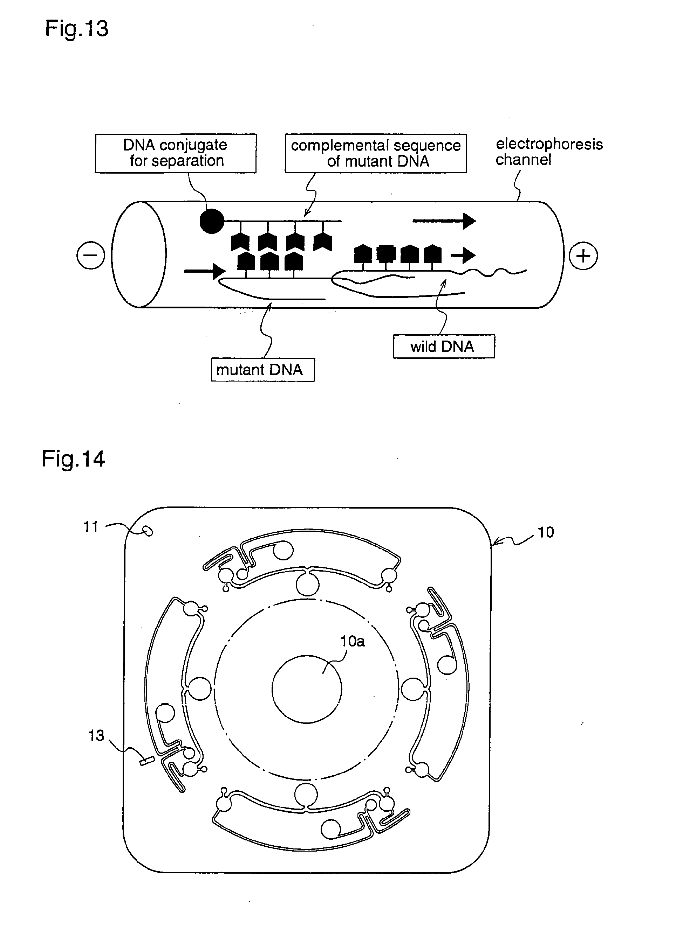

When mutant DNA (normal DNA) is included in the DNA sample, this mutant DNA is trapped by the DNA conjugate for separation having a sequence that is complementary with the mutant DNA as shown in figure 13, whereby the electrophoresis speed of the mutant DNA becomes lower than that of the wild DNA. As the result, the wild DNA and the mutant DNA are separated as shown in figure 12 when absorbance of the electrophoresis channel C is detected by the optical detection part 40, and two peaks of absorbance appear. On the other hand, when no mutant DNA is included in the DNA sample, only one peak of absorbance appears. Thereby, it is possible to determine as to whether mutant DNA is included in the DNA sample or not.

In the case of figure 12, the peak on the right side of the graph is the wild DNA because its electrophoresis speed is high, while the peak on the lift side is the mutant DNA because its electrophoresis speed is low.

Further, in the biological sample discrimination apparatus according to the first embodiment, it is also possible to measure absorbance at a certain point in the electrophoresis channel C in the outer circumference channel 116b, instead of measuring the absorbance of the entire electrophoresis channel C of the outer circumference channel 116b by rotating the plate 10 with the low-speed rotation motor 38.

Further, instead of measuring the absorbance, there is a method of detecting fluorescence by modifying a fluorescent material (e.g., Cy5 or FITC) at the end of the DNA.

When measuring the fluorescence or absorbance, in order to obtain an accurate result continuously, the absorbance is not measured at a certain point in the electrophoresis channel C by the optical detection unit 40, but the plate 10 is rotated at a low speed by the low-speed rotation motor 38, and the entire electrophoresis channel C is scanned with the optical detection unit 40 to measure the absorbance of the entire electrophoresis channel C at predetermined time intervals, as shown in figure 12. The reason is as follows. For example, there is a case where the DNA sample to be measured has a difference in speeds between the wild DNA and the mutant DNA which are included in the DNA sample in a position where the absorbance is not measured, while the DNA sample has no difference in speeds between the wild DNA and the mutant DNA in a point where the absorbance is measured.

Therefore, it is possible to constantly obtain an accurate result by scanning the entire electrophoresis channel C at predetermined time intervals using the optical detection unit 40 to measure the fluorescence or absorbance.

(Step S18) As described above, the outer circumference channel 116b is scanned with the optical detection unit 40 by an arbitrary number of times (nine times in this fourth embodiment) to complete the measurement. Then, voltage application to the electrodes 32a and 32b by the high-voltage power supply 66 is stopped and heating by the heater 33 is also stopped, and thereafter, the plate 10 as well as the sealing plate 37 are rotated by the low-speed rotation motor 38 so that the plate 10 is positioned above the plate holder 22.

(Step S19) When the position is determined, the elevation stage 50 is moved down from the second-level position to the first-level position, and the clamper 36 and the plate receiving part 21a are separated from each other in that position, and thereafter, the elevation stage 50 is further moved down to the lowermost point to set the plate 10 on the plate holder 22. At this point in time, the plate 10 can be discharged from the biological sample discrimination apparatus 100.

As described above, according to the first embodiment, the DNA conjugate solution is filled in the outer circumference channel 116b using centrifugal force by the filling unit 20, and the DNA sample is pressurized and added by a predetermined amount to the DNA conjugate solution by centrifugal force, and thereafter, a voltage is applied to the electrodes 32a and 32b provided in the discrimination unit 30 to make the DNA sample perform electrophoresis. Then, the plate 10 is rotated several times at a low speed for every predetermined period of time by the discrimination unit 30, and the entire electrophoresis channel portion of the outer circumference channel 116b is scanned by a predetermined number of times with the optical detection unit 40, thereby to measure the absorbance or fluorescence of the electrophoresis channel portion. Therefore, the existence of target DNA to be detected, which is included in the DNA sample obtained by extracting specific DNA from cell or blood, can be discriminated accurately in a short time, without using a capillary tube that needs complicated preparation work, whereby discrimination of various diseases or research of DNA abnormality can be carried out accurately and speedily.

Further, according to the biological sample discrimination apparatus 100 of the present invention, the elevation stage 50 is driven between the first-level position and the second-level position by the vertical drive motor 51 to vertically move the plate 10, and the sample filling process by the filling unit 20 is carried out in the first-level position while the optical detection process by the discrimination unit 30 is carried out in the second-level position. Therefore, reduction in size and weight of the biological sample discrimination apparatus can be achieved.

In this first embodiment, the biological sample is a DNA sample, and it is determined whether a mutant sample is included in the DNA sample or not, i.e., whether SNPs are present or not. However, the present invention is not restricted to such application, and it is also applicable to antigen-antibody reaction or enzyme reaction.

Further, in this first embodiment, when performing the process of filling the DNA conjugate solution in the first channel 116 (step S5), the plate 10 is rotated at a high speed with the high-speed rotation motor 21 of the filling unit 20, and the DNA conjugate solution is filled in the channel by centrifugal force that is generated by the high-speed rotation. However, the DNA conjugate solution may be filled in the channel by utilizing, other than the centrifugal force, pressurization to the buffer agent injection part 123 using a pump, or aspiration of the DNA conjugate solution from the air hole 135 of the sample pool 115 using a pump, or a capillary phenomenon of the DNA conjugate solution itself.

As described above, when filling the DNA conjugate solution in the channel by aspiration, for example, the pressurization pump 52 in the device 100 is constituted as a pump system capable of performing pressurization and aspiration so that the pressurization part 24 can perform aspiration through the pump tube 53, whereby aspiration can be realized without providing the device with a new aspiration unit.

Further, in step S12, when the DNA sample is transferred from the first flow position E1 to the second flow position E2 in the second channel 117 by the filling unit 20, the injection port 124 for injecting the DNA sample is pressurized for a predetermined period of time by the pressurization part 24. However, instead of the pressurization process, for example the pressurization pump 52 may be implemented by a pump system capable of pressurization and aspiration as described above, and the injection port 124 or the air hole 135 of the sample pool 115 may be aspirated by the pressurization part 24, and furthermore, a capillary phenomenon of the DNA sample may be also utilized.

Further, in step S14, when adding a predetermined amount of the DNA sample to the DNA conjugate solution, the plate 10 is rotated at a high speed, and the DNA sample is left only in the quantification part 117b by centrifugal force caused by the high-speed rotation, whereby a predetermined amount of the DNA sample can be added. However, this process can be realized by, instead of using the centrifugal force, aspirating the injection port 124 or the air hole 135 of the sample pool 115 by the pressurization part 24. To be specific, the DNA sample that is moved up to the second flow position E2 in the second channel 117 by the pressurization part 24 (refer to figure 6(d)) is aspirated and removed from the air hole 135 of the sample pool 115 so that a predetermined amount of the DNA sample is left in the quantification part 117a, thereby to separate the DNA sample. In this case, in order to prevent that a predetermined amount of the DNA sample to be left in the quantification part 117a or the DNA conjugate solution in the first channel is undesirably aspirated by the pressurization pump 52, it is necessary to adjust the viscosity between the DNA conjugate solution and the DNA sample.

As described above, when quantification of the DNA sample is carried out by the aspiration process, migration of the DNA sample other than that in the quantification part 117a becomes faster due to the centrifugal force caused by high-speed rotation of the plate 10, and consequently, a predetermined amount of the DNA sample can be added in a shorter time into the outer circumference channel 116b that is filled with the DNA conjugate solution.

Accordingly, when a predetermined amount of the DNA sample is added into the quantification part 117a in the second channel 117, the process steps from step S5 where the DNA sample is in the first flow position E1 in the second channel 117 (figure 6(e)) to step S14 where a predetermined amount of the DNA sample is added (figure 6(e)) can be carried out by aspirating the air hole 135 of the sample pool 115 using the pressurization part 24. Since filling of the DNA sample into the quantification part 117a is carried out by using a difference in pressures between the sample injection part 114 and the sample pool 115 in the second channel 117, it can also be carried out by pressurizing the injection port 124 of the sample injection part 14 by the pressurization part 24.

Further, although in this first embodiment the second flow position E2 is inside the sample pool 115, the second flow position E2 may be set at any position so long as the quantification part 117a is filled with the DNA sample, and therefore, the second flow position E2 does not necessarily reach the sample pool 115.

Further, while in this first embodiment one channel pattern 110 is formed on the plate 10, four identical patterns may be formed on the plate 10 as shown in figure 14 to detect SNPs of four different DNA samples at the same time. In this case, it is necessary to provide four sets of the electrodes 32a and 32b, the heaters 33, the pressurization parts 24, and the thermistors 34 which are disposed on the sealing plate 37. In the case where four channel patterns 110 are provided on the plate 10, when performing measurement by the discrimination unit 30, application of voltage to the electrodes 32a and 32b to be inserted in the respective patterns by the high-voltage power supply 66 should be shifted for each pattern, considering a time lag in measurement for each pattern. Thereby, the electrophoresis time of data during the measurement can be made equal in all patterns. The number of times the measurement is repeated can be set according to user requests.

Further, when plural channel patterns 110 are formed on the plate 10 as shown in figure 14, DNA samples of different persons may be added to the respective channel patterns 110 to discriminate not SNPs of one person but SNPs of plural persons.

For example, the same DNA conjugate is filled in all the channel patterns, and DNA samples of different persons as many as the number of channel patterns formed on the plate 10 are injected into the respective channel patterns, whereby discrimination for the same SNPs can be performed to the plural persons by one-time measurement, and data relating to the distribution states for the respective SNPs can be obtained at one time.

In this first embodiment, in order to keep the outer circumference channel 116b of the plate 10 at a predetermined constant temperature, the outer circumference channel 116b is heated to the constant temperature by the heater 33. However, a peltiert element or the like may be provided instead of the heater 33 to cool or heat the peltiert element according to the temperature of the outer circumference channel 116b, thereby controlling the outer circumference channel 116b at the constant temperature.

Further, in this first embodiment, purification of the DNA conjugate solution injected into the buffer agent injection part 113 is carried out in step S7, the DNA conjugate solution may be subjected to purification when it is created, and thereafter, the purified DNA conjugate solution may be injected into the buffer agent injection part 113. In the case where purification such as removal of unreacted vinyl DNA is performed during creation of the DNA conjugate solution, the created DNA conjugate solution is hermetically sealed in a dialysis membrane such as cellophane, and the dialysis membrane is rotated in a large amount of ultrapure water to remove the unreacted DNA in the membrane. Thereby a high-purity DNA conjugate solution can be obtained.

In the case where purification is carried out during creation of the DNA conjugate solution, since it is not necessary to perform conjugate purification by the discrimination unit 30, the process goes to step S10 after the fitting position of the plate 10 is detected by the discrimination unit 30 in step S6.

Furthermore, in this first embodiment, the DNA sample as a biological sample migrates by electrophoresis in the DNA conjugate solution as a buffer agent, and the electrodes 32a and 32b are included in the discrimination unit 30 while the electrode insertion part 111 and 112 into which the electrodes are inserted are disposed on the plate 10. However, when the DNA sample is not migrated by electrophoresis, it is not necessary to provide the electrodes 32a and 32b of the discrimination unit 30, and the electrode insertion parts 111 and 112 and the electrode standby holes 118 and 119 on the plate 10.

### (Embodiment 2)

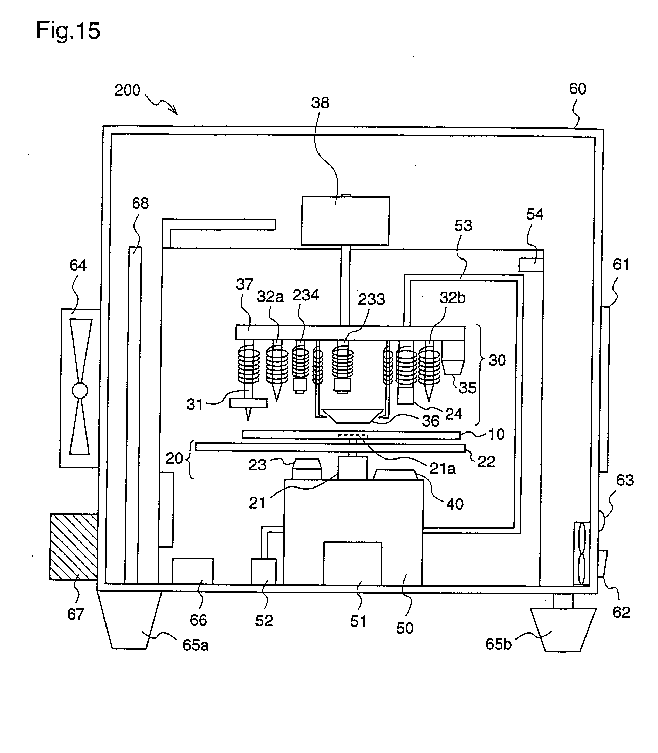

Hereinafter, a biological sample discrimination apparatus according to a second embodiment will be described with reference to figures 15~18.

In the biological sample discrimination apparatus 100, the heater for heating the inside of the channel pattern formed on the plate and the thermistor for measuring the temperature of the channel are hung from the ceiling plate of the discrimination unit 30. In this second embodiment, however, these elements are disposed on the plate.

Figure 15 is a block diagram illustrating the biological sample discrimination apparatus according to the second embodiment. As shown in figure 15, the biological sample discrimination apparatus 200 according to the second embodiment is provided with a heater contact pin 233 for applying a predetermined voltage to the plate 10 instead of the heater 33 provided in the discrimination unit 30, and a thermistor contact pin 234 for applying a predetermined voltage to the plate 10 instead of the thermistor 34 provided in the discrimination unit 30. Since other constituents are identical to those of the first embodiment, repeated description is not necessary.

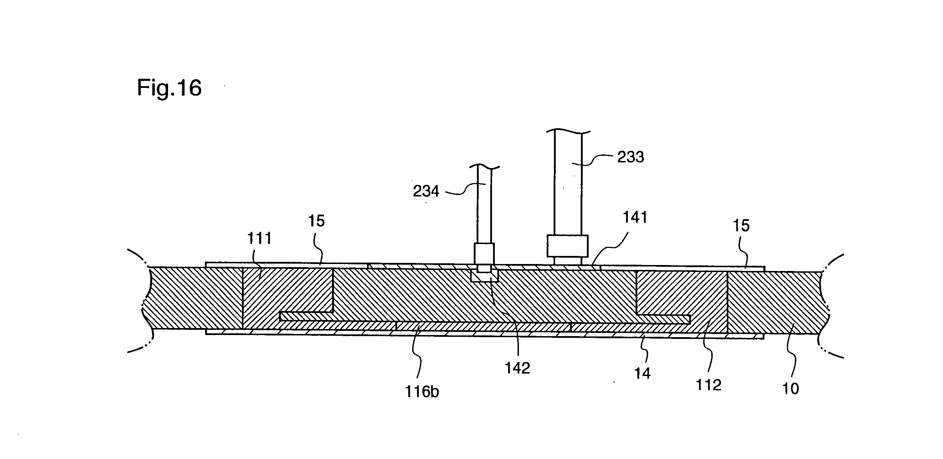

Figure 16 is a diagram illustrating a cross-section of a plate according to the second embodiment. As shown in figure 16, in the plate 10 of the second embodiment, a hot wire or a circuit serving as an alternative for a heater (a heater electrode thin film) 141 and a thermistor 142 are embedded above the outer circumference channel 116b, and the heater contact pin 233 and the termistor contact pin 234 which are provided in the discrimination unit 30 of the biological sample discrimination apparatus 200 contact the heater electrode thin film 141 and the thermistor 142 to apply a voltage, whereby the heater electrode thin film 141 heats up the outer circumference channel 116b to a predetermined temperature while the thermistor 142 measures the temperature of the outer circumference channel 116b to control the voltage applied to the heater electrode thin film 141. The construction of the channel pattern 110 of the plate 10 is identical to that of the first embodiment.

As described above, the thermistor and the heater which have been provided in the discrimination unit 30 are provided in the plate 10 while the termistor contact pint 234 and the heater contact pin 233 are provided in the discrimination unit 30, and a predetermined voltage is applied to the plate 10, whereby the apparatus 200 can be made more compact.

Hereinafter, the operation of the biological sample discrimination apparatus 200 according to the second embodiment will be described.

(Step S1) Initially, a DNA conjugate solution and a DNA sample are injected from the injection ports 123 and 124 into the buffer agent injection part 113 and the sample injection part 114 of the channel pattern 110 which is provided on the plate 10, respectively, by an manual operation using a syringe.

(Step S2) Then, by operating an operation button (not shown) or the like, the plate 10 in which the sample is injected is set on the plate holder 22 of the apparatus 200, and thereafter, plate loading is carried out. The position of the elevation stage 50 at the plate loading is the lowermost point.

(Step S3~Step S5) Thereafter, the elevation stage 50 is moved up to the first-level position by the vertical drive motor 51, and a conjugate filling process is carried out by the high-speed rotation motor 21 at the first-level position. Since the conjugate filling process is identical to that described for the first embodiment, repeated description is not necessary.

(Step S6~Step S7) After the conjugate filling process is completed, a fitting position between the plate 10 and the discrimination unit 30 is detected by the positioning mark detection sensor 35 provided in the discrimination unit 30, and thereafter, the elevation stage 50 is moved to the second-level position.

Hereinafter, the state until the plate 10 is fitted to the discrimination unit 30 will be described in detail. Initially, the fitting pin 31 of the discrimination unit 30 starts to be inserted in the fitting pin hole 11 of the plate 10, and next, the electrodes 32a and 32b of the discrimination unit 30 are inserted in the electrode inlets 121 and 122 of the first and second electrode insertion parts 111 and 112 of the plate 10, and then the pressurization part 24 contacts the pressurization standby hole 136 of the plate 10, and thereafter, the plate 10 is moved up until the heater electrode thin film 141 and the thermistor 142 provided on the plate 10 contact the heater contact pin 233 and the thermistor contact pin 234 provided in the discrimination unit 30. As the result, the fitting pin 31, the electrodes 32a and 32b, the pressurization part 24, the heater contact pin 233, and the thermistor contact pin 234 are pressed against the plate 10, whereby the discrimination unit 30 and the plate 10 are fitted to each other. Accordingly, the position of the elevation stage 50 where the discrimination unit 30 is fitted to the plate 10 is the second-level position.

After the elevation stage 50 moves up to the second-level position and the plate 10 is fitted to the respective components of the discrimination unit 30, a voltage is applied to the heater electrode thin film 141 embedded in the plate 10 by the heater contact pin 233, and the outer circumference channel 116b is heated up to a predetermined temperature while controlling the voltage applied to the heater electrode thin film 141 by measuring the temperature of the outer circumference channel 116b with the thermistor 142 embedded in the plate 10. As described for the first embodiment, although the heater electrode thin film 141 is embedded in the plate 10, any element may be used so long as the temperature of the outer circumference channel 116b can be kept constant. For example, a circuit capable of not only heating but both cooling and heating, such as a peltiert element, may be embedded in the plate 10.

(Step S8) After the outer circumference channel 116b is set at the predetermined temperature as described above, a voltage supplied from the high-voltage power supply 66 is applied to the electrodes 32a and 32b provided on the sealing plate 37, thereby performing conjugate purification.

(Step S9~Step S12) After the conjugate purification is ended, the second sample injection part 114 is subjected to pressurization by the filling unit 20, whereby the DNA sample is filled in the second channel.

(Step S13~Step S14) Thereafter, the elevation stage 50 is moved down from the second-level position to the first-level position by the vertical drive motor 51, and a predetermined amount of DNA sample is added to a portion of the outer circumference channel 116b that is filled with the DNA conjugate solution, by the filling unit 20.

(Step S15) Thereafter, in order to move the elevation stage 50 from the first-level stage to the second-level stage by the vertical drive motor to perform measurement by the discrimination unit 30, the plate recognition mark 13 provided on the upper surface of the plate 10 is detected by the positioning mark detection sensor 35, thereby determining a position where the discrimination 30 and the plate 10 can be fitted to each other.

(Step S16~Step S17) After the positioning, the elevation stage 50 is moved up to the second-level position by the vertical drive motor 51 to fit the sealing plate 37 to the plate 10, and the outer circumference channel 116b is heated up to a predetermined temperature by applying a voltage from the heater contact pin 233 to the heater electrode thin film 141, and then a voltage supplied from the high-voltage power supply 66 is applied to the electrodes 32a and 32b to make the DNA sample perform electrophoresis in the outer circumference channel 116b that is filled with the DNA conjugate solution, followed by an optical detection process for detecting the absorbance or fluorescence of the outer circumference channel 116b by the optical detection unit 40.

(Step S18) When the outer circumference channel 116b is scanned with the optical detection unit 40 by an arbitrary number of times to complete the measurement, voltage application to the electrodes 32a and 32b by the high-voltage power supply 66 is stopped and heating by the heater 33 is also stopped, and then the plate 10 as well as the sealing plate 37 are rotated by the low-speed rotation motor 38 so that the plate 10 is positioned above the plate holder 22.

(Step S19) When the position is determined, the elevation stage 50 is moved down from the second-level position to the first-level position, and the clamper 36 and the plate receiving part 21a are separated from each other in that position, and then the elevation stage 50 is further moved down to the lowermost point to set the plate 10 on the plate holder 22. At this point in time, the plate 10 can be discharged from the biological sample discrimination apparatus 200.

As described above, according to the first embodiment, the heater electrode thin film 141 and the thermistor 142 are embedded in the plate 10 while the heater contact pin 233 and the thermistor contact pin 234 are provided in the discrimination unit 30 of the biological sample discrimination apparatus 200, and a predetermined voltage is supplied from the heater contact pin 233 to the heater electrode thin film 141 of the plate 10 to heat the outer circumference channel 116b, and further, a predetermined voltage is supplied from the thermistor contact pin 234 to the thermistor 142 of the plate 10 to measure the temperature of the outer circumference channel 116b, thereby controlling the heater electrode thin film 141. Therefore, it is possible to achieve further reductions in the size and the weight of the biological sample discrimination apparatus 200 which can discriminate the existence of the target DNA to be detected, which is included in the DNA sample obtained by extracting a specific DNA from cell or blood, accurately in a short time, without using a capillary tube that needs complicated preparation work.

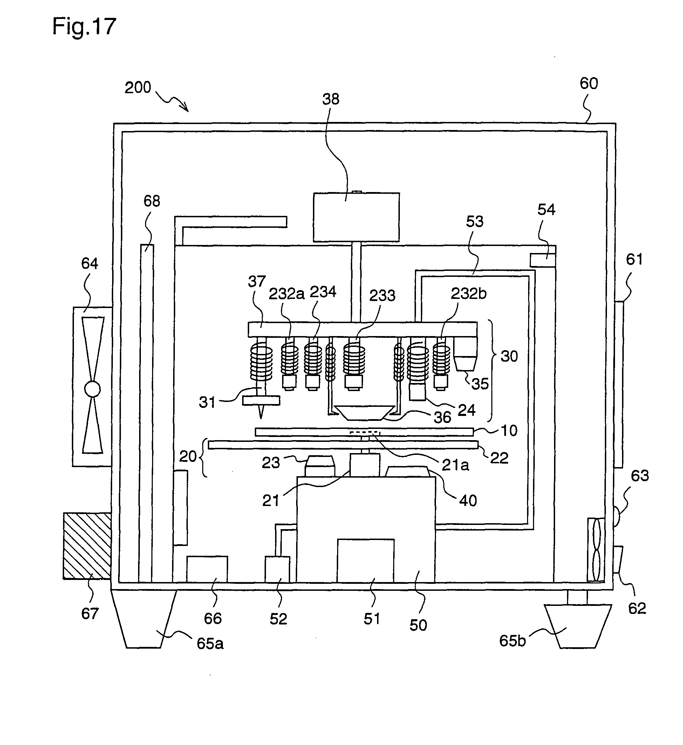

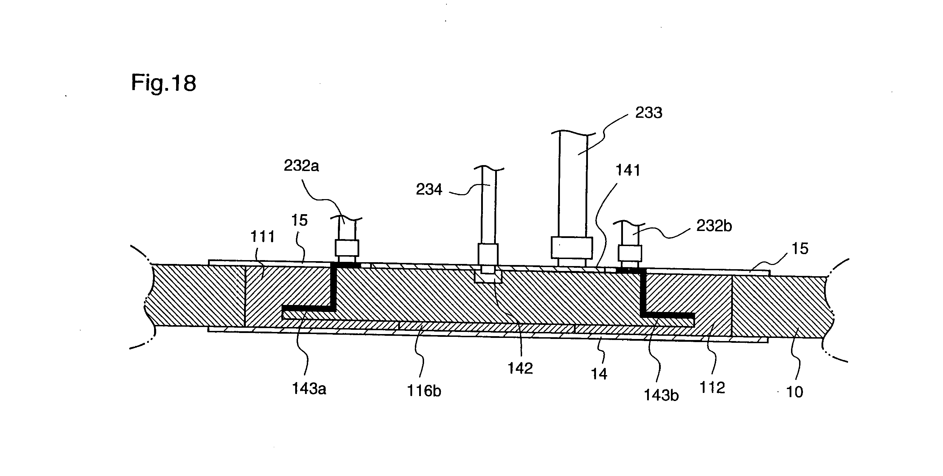

While in the above description the heater electrode thin film 141 and the thermistor 142 are embedded in the plate 10, first and second electrodes 143a and 143b may be provided in the first and second electrode insertion parts 111 and 112 of the plate 10, as shown in figure 18. In this case, on the biological sample discrimination apparatus side, electrode contact pins 232a and 232b for applying voltages to the respective electrodes 143a and 143b disposed on the plate 10 may be provided as shown in figure 17, instead of the electrodes 32a and 32b disposed in the discrimination unit 30. Thereby, the biological sample discrimination apparatus 200 can be further reduced in size, weight, and cost.

Also in this second embodiment, as in the first embodiment, the pressurization pump 52 may be constructed as a pump system capable of performing pressurization and aspiration so that the pressurization part 24 can perform aspiration through the pump tube 53. In this case, quantification of the DNA sample or filling and quantification of the DNA sample can be carried out by the aspiration process, whereby the DNA sample can be quantified in a shorter time, and a predetermined amount of the DNA sample can be added into the DNA conjugate solution.

### (Embodiment 3)

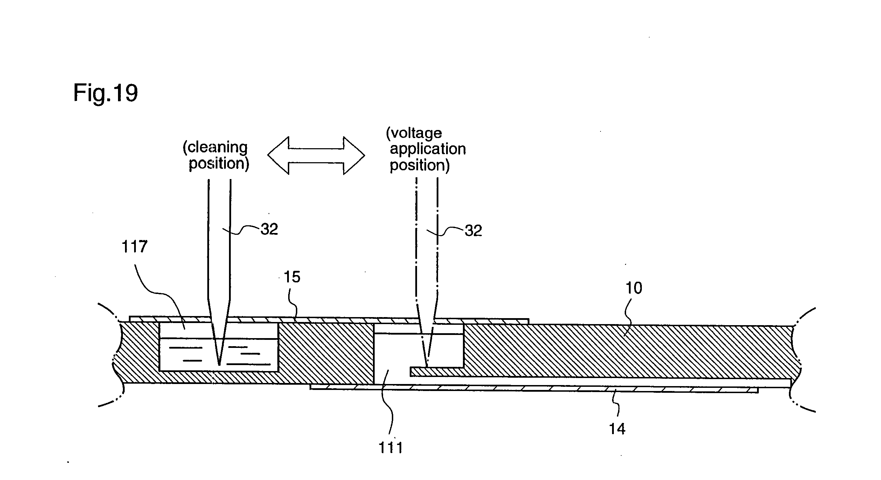

Hereinafter, a biological sample discrimination apparatus according to a third embodiment will be described with reference to figures 19~21.

In this third embodiment, while the electrodes to be inserted in the electrode insertion parts stand by, the respective electrodes are cleaned.

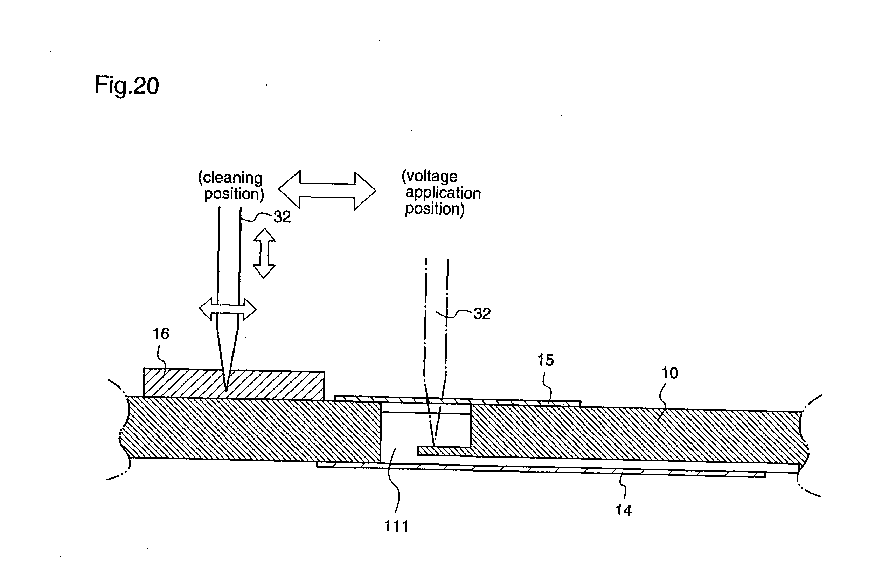

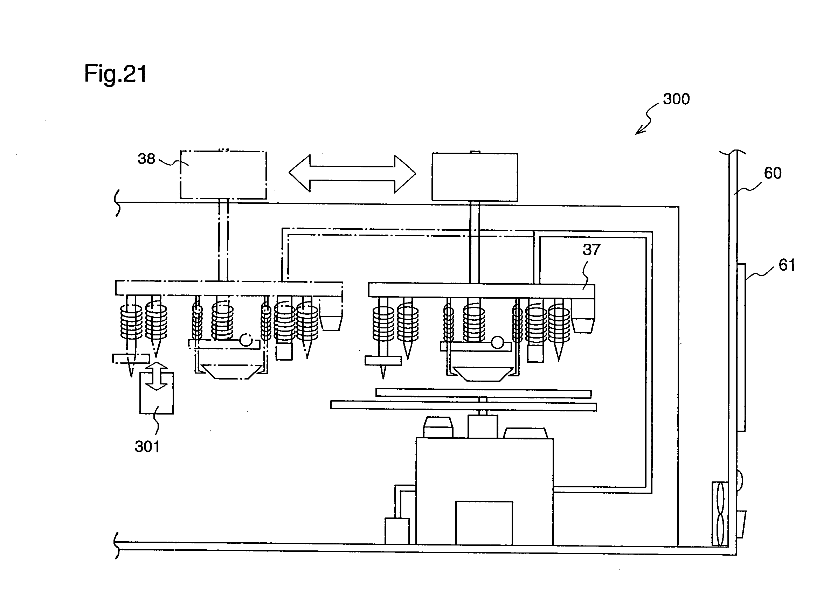

Figure 19 is a diagram illustrating the constructions of the first electrode insertion part and the first electrode standby hole disposed on the plate according to the third embodiment, figure 20 is a diagram illustrating a region in the vicinity of the first electrode insertion part disposed on the plate, having another construction according to the third embodiment, and figure 21 is a diagram illustrating the construction of a detection unit according to the third embodiment. While in the following description only the first electrode insertion part will be described as an example to simplify the description, the second electrode insertion part also has the same construction and is cleaned simultaneously with the first electrode insertion part.

As a first method, a cleaning solution for cleaning the electrode is stored in the first electrode standby hole 118. When the cleaning solution is stored in the first electrode standby hole 118, in step S12 shown in figure 5, the electrode 32 can be cleaned with the cleaning solution stored in the first electrode standby hole 118 while the second sample injection part 114 is pressurized by the pressurization part 24 and the electrode 32 is inserted for standby in the first electrode standby hole 118. Thus, foreign objects such as dust attached to the electrode 32 can be rinsed away when the conjugate is purified or the apparatus 100 or 200 are stored.

As a second method, as shown in figure 20, a cleaning area 16 comprising felt or a lot of fine raising existing in one position is provided in a portion of the plate 10, which portion is concentric with the first electrode insertion part 111 to which the electrode 32 is inserted, and has no channel. When such cleaning area 16 is produced on the plate 10, it is possible to clean the electrode 32 by putting the electrode 32 into the cleaning area 16 or slightly rotating the electrode 32 after it is put into the cleaning area 16, while the discrimination unit 30 is rotated by the measurement motor 38 to make the electrode 32 stand by, in step S10 shown in figure 5. Thereby, foreign objects such as dust that is attached to the electrode 32 can be removed when the conjugate is purified or the apparatus 100 or 200 are stored. The insertion of the electrode 32 into the cleaning area 16 can be achieved by vertically driving the elevation stage 50, and the slight rotation of the electrode 32 in the cleaning area 16 can be achieved by rotating the discrimination unit 30 by the low-speed rotation motor 38.

As a third method, as shown in figure 21, an electrode cleaning bath 301 is provided in the biological sample discrimination apparatus. Thus, the electrode cleaning bath 301 is provided in the apparatus 300, and the electrode 32 is slid to a position above the electrode cleaning bath to clean the electrode 32 while the discrimination unit 30 during a series of operations stands by or every time the apparatus 300 is operated, whereby foreign objects such as dust that is attached to the electrode 32 can be removed when the conjugate is purified or the apparatus 300 is stored.

As described above, according to the third embodiment, when it is necessary to perform conjugate purification by inserting the electrodes 32a and 32b in the electrode insertion parts 111 and 112, the electrodes 32a and 32b are cleaned by the cleaning solution or the cleaning area 16 comprising felt or the like during a period of time from when conjugate purification is ended to when the electrodes 32a and 32b are inserted into the first and second electrode insertion parts 111 and 112. On the other hand, when there is no necessity of performing conjugate purification, the electrodes 32a and 32b are cleaned during a period of time from when the operation is started to when the electrodes 32a and 32b are inserted into the first and second electrode insertion parts 111 and 112. Therefore, when the DNA sample that is obtained by extracting specific DNA from cell or blood is measured by the biological sample discrimination apparatus, more precise detection result can be obtained.

### (Embodiment 4)

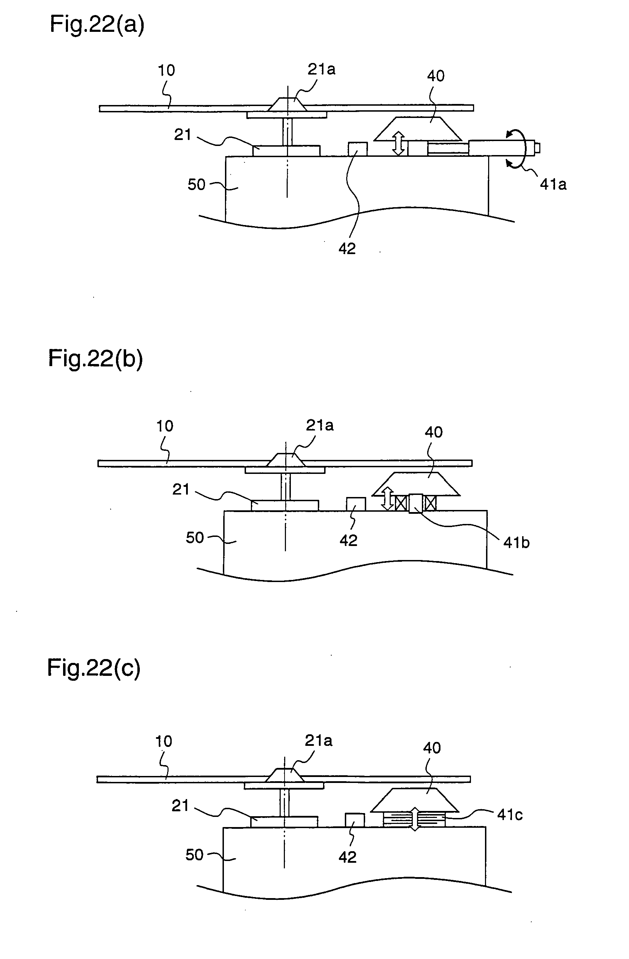

Hereinafter, a biological sample discrimination apparatus according to a fourth embodiment of the present invention will be described with reference to figure 22.

While in the first to third embodiments the optical detection unit 40 is fixed onto the elevation stage 50 so as to be moved integrally with the elevation stage 50, this fourth embodiment is further provided with a height adjustment mechanism for adjusting the height of the optical detection unit 40.

In the respective embodiments mentioned above, the biological sample discrimination apparatus discriminates presence/absence of SNPs in the DNA sample, and the optical detection unit 40 detects the absorbance or fluorescence of a portion of the channel pattern 110 formed on the plate 10 to detect the electrophoresis state where the DNA sample migrates by electrophoresis in the DNA conjugate solution, and presence/absence of SNPs is determined on the basis of the detection result.

As described above, when performing discrimination for the biological sample by detecting the absorbance or fluorescence of a portion of the channel pattern 110 as described above, the optical detection unit 40 must be located at a predetermined distance from the plate 10. The reason is as follows. Unless measurement is carried out with keeping a constant distance from the specimen to be measured, the amount of light incident on the optical detection unit 40 varies, resulting in variations in the detection result.

In the respective embodiments mentioned above, a constant distance is kept between the plate 10 and the optical detection unit 40 by providing the optical detection unit 40 on the elevation stage 50. However, the plate 10 receives a pressure during the measurement because the heater 33 contacts the plate 10 or the electrodes 32 are inserted into the respective electrode insertion parts 111 and 112, resulting in a possibility that slight deflection or the like occurs in the plate 10, and thereby the position of the plate 10 changes.

In order to deal with a change in the plate position due to such slight deflection or the like, in this fourth embodiment, a distance measurement unit 42 for measuring a distance between the elevation stage 50 and the plate 10 by reflection of laser or the like is provided on the elevation stage 5.0, and further, a height adjustment unit 41 for adjusting the height of the optical detection unit 40 according to the measurement result of the distance measurement unit 42 is disposed in the optical detection unit 40.

An actuator may be adopted as the height adjusting unit 41. For example, a micrometer 41a may be provided as shown in figure 22(a). Further, a voice coil motor 41b may be provided as shown in figure 22(b), and a magnetic flux is generated by a permanent magnet around the voice coil motor 41b, and the direction of a current that flows in the voice coil motor 41b is changed according to the measurement result from the distance measurement unit 42 to vertically move the coil 41b. Alternatively, a piezoelectric element 41c is provided as shown in figure 22(c), and a voltage according to the measurement result from the distance measurement unit 42 is applied to the piezoelectric element 41c to vertically move the piezoelectric element 41c. Thereby, the positions of the optical detection unit 40 and the plate 10 can be minutely adjusted to always keep a constant distance between them.

As described above, according to the fourth embodiment, since the distance measurement unit 42 is provided on the elevation stage 50 and the height adjustment unit 41 for adjusting the height is provided in the optical detection unit 40, the distance between the plate 10 and the optical detection unit 40 can always be kept constant by the height adjustment unit 41 according to the measurement result of the distance measurement unit 42, and consequently, extremely accurate detection result can be obtained when the DNA sample obtained by extracting specific DNA from cell or blood is measured in biological sample discrimination apparatus.

### (Embodiment 5)

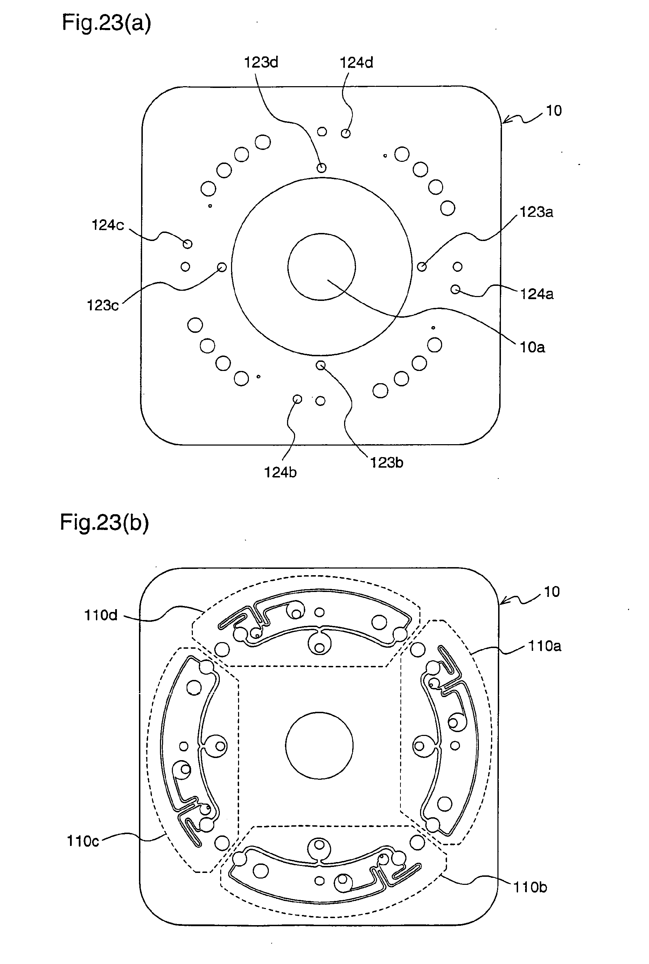

Hereinafter, a plate for biological sample discrimination will be described with reference to figures 23~27.

Figure 23 is a diagram illustrating the construction of the biological sample discrimination plate according to the fifth embodiment, wherein figure 23(a) shows a sample injection surface of the plate, and figure 23(b) shows a channel formation surface of the plate.

The plate 10 according to the fifth embodiment is 2mm thick, and an opening 10a is provided in its center as shown in figure 23. Further, grooves 50 µm deep are formed on the channel pattern formation surface of the plate, and an acrylic film 50 µm thick is adhered to the groove formation surface to create hermetically-sealed channels. On the plate according to the fifth embodiment, four channel patterns 110a~110d are formed, a portion enclosed in a dotted line is an analysis pattern for one analyte. A DNA conjugate and a DNA sample as an analyte are injected into the hermetically-sealed channels, and injection ports 123a~123d for the DNA conjugate solution and injection ports 124a~124d for the DNA sample are provided for the respective channel patterns 110a~110d. Accordingly, four kinds of DNA can be simultaneously analyzed on the plate 10.

Since the details of the respective channel patterns 110 are identical to those described for the first embodiment, repeated description is not necessary.

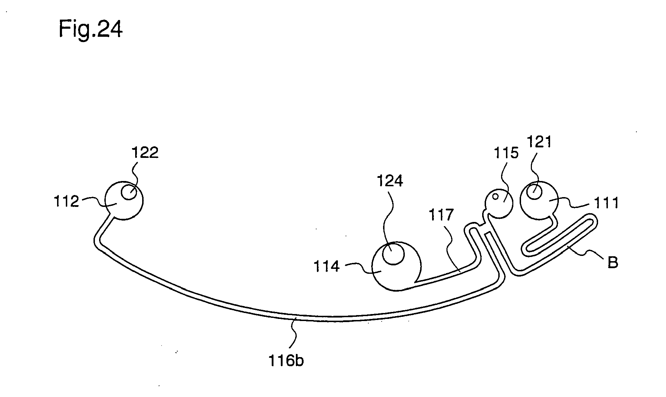

Figure 24 is a diagram illustrating another example of a channel pattern formed on the biological sample discrimination plate.

In the channel pattern shown in figure 24, the buffer agent injection part 123 and the inner circumference channel 116a in the channel pattern 110 shown in the first embodiment are omitted, and the electrode insertion parts 121 and 122 into which the negative electrode and the positive electrode are respectively inserted in the channel pattern of the first embodiment are used as a buffer agent insertion part into which the DNA conjugate is injected.

When the biological sample discrimination plate is thus constituted, it is possible to discriminate presence/absence of SNPs in the DNA sample accurately in a short time, with simpler channels, like the channel pattern according to the first embodiment.

Further, in the respective embodiments mentioned above, the channel pattern comprising the buffer agent injection part 123, the inner circumference channel 116a, the electrode insertion parts 111 and 112, the outer circumference channel 116b, the sample injection part 124, the second channel 117 including the quantification part 117a, the sample pool 115 and the like is formed on the same surface of the plate 10. However, among these injection parts and channels, particularly the inner circumference channel 116a, the outer circumference channel 116b, and the second channel 117 including the quantification part 117a may be respectively formed on the front and rear surfaces of the same plate 10. Further, for example, the sample injection part 124 and the buffer agent injection part 114 may be formed on different surfaces. Thereby, when the sample and the buffer agent are injected into the plate 10, the injection ports can be easily discriminated, thereby avoiding incorrect injection.

As described above, according to the fifth embodiment, a predetermined amount of the DNA sample is held in the quantification part A on the plate 10, and electrophoresis of the DNA sample is realized by the positive electrode insertion part 112, the negative electrode insertion part 121, and the channels 116b and B, and furthermore, the channel 116b in which electrophoresis is carried out is shaped in an arc. Therefore, when a DNA sample obtained by extracting specific DNA from cells or blood is measured on the biological sample discrimination plate, extremely accurate detection result can be obtained.

### APPLICABILITY IN INDUSTRY

A biological sample discrimination apparatus according to the present invention is useful as an apparatus for performing discrimination of a biological sample such as a DNA sample inexpensively and easily.

## Claims

1. A biological sample discrimination apparatus comprising:
a plate on which a channel pattern is formed, said channel pattern comprising a first channel into which a buffer agent is injected, and a second channel having, in a portion thereof, a quantification part that has a portion common to the first channel, and holds a predetermined amount of a biological sample, said biological sample being injected into the channel including the quantification part;
a filling unit for filling the buffer agent into the first channel of the plate while filling the biological sample into the second channel including the quantification part, and thereafter, making a predetermined amount of the biological sample remain in the quantification part of the second channel to add the predetermined amount of the biological sample to the buffer agent; and
a discrimination unit for making the predetermined amount of the biological sample that is held in the quantification part migrate in the buffer agent to discriminate the biological sample that migrates in the buffer agent.

2. A biological sample discrimination apparatus as defined in Claim 1 wherein
said plate has a buffer agent injection part connected to the first channel, a sample injection part connected to the second channel, and an air hole connected to the sample injection part in the second channel, and
said filling unit,
rotates the plate in which the buffer agent is injected into the buffer agent injection part and the sample is injected into the sample injection part, thereby to make the buffer agent stored in the buffer agent injection part flow into the first channel by a centrifugal force, and simultaneously, make the biological sample stored in the sample injection part flow up to a first flow position that does not reach the quantification part in the second channel,
pressurizes the sample injection part to make the biological sample in the second channel flow from the first flow position up to a second flow position including the quantification part in the second channel, and thereafter,
rotates the plate to separate the biological sample in the second channel so that a predetermined amount of the biological sample remains in the quantification part of the second channel.

3. A biological sample discrimination apparatus as defined in Claim 1 wherein
said plate has a buffer agent injection part connected to the first channel, a sample injection part connected to the second channel, and an air hole connected to the sample injection part in the second channel, and
said filling unit
rotates the plate in which the buffer agent is injected into the buffer agent injection part and the sample is injected into the sample injection part, thereby to make the buffer agent stored in the buffer agent injection part flow into the first channel by a centrifugal force, and simultaneously, make the biological sample stored in the sample injection part flow up to a first flow position that does not reach the quantification part in the second channel,
pressurizes the sample injection part to make the biological sample in the second channel flow from the first flow position up to a second flow position including the quantification part in the second channel, and thereafter,
performs aspiration from the air hole to separate the biological sample in the second channel so that a predetermined amount of the biological sample remains in the quantification part of the second channel.

4. A biological sample discrimination apparatus as defined in Claim 2 or 3 wherein said filling unit includes
a motor for rotating the plate at a high speed, and
a pressure control part for pressurizing or aspirating the second channel.

5. A biological sample discrimination apparatus as defined in Claim 2 or 3 wherein
said filling unit is disposed at a lower part of the biological sample discrimination apparatus while said discrimination unit is disposed at an upper part of the apparatus, and
said apparatus further including an elevation stage for vertically driving the plate between the filling unit and the discrimination unit.

6. A biological sample discrimination apparatus as defined in Claim 5 wherein
said discrimination unit is hung, via a spring, from a ceiling board which is provided in an upper portion of the apparatus.

7. A biological sample discrimination apparatus as defined in Claim 6 wherein
a pressure control unit for pressurizing or aspirating the second channel is hung from the ceiling board via a spring.

8. A biological sample discrimination apparatus as defined in Claim 2 or 3 wherein
said discrimination unit includes a heater for measuring a temperature of the first channel with a thermistor, and controlling the first channel to a predetermined temperature in accordance with a result of the measurement.

9. A biological sample discrimination apparatus as defined in Claim 8 wherein
said discrimination unit includes, instead of the heater and the thermistor, a heat contact pin and a thermistor contact pin for applying a voltage to a heater and a thermistor which are provided on the plate.

10. A biological sample discrimination apparatus as defined in Claim 8 wherein
said heater is disposed on the first channel, and said thermistor is disposed at a position that is separated from the heater by a distance between the first channel and the heater.

11. A biological sample discrimination apparatus as defined in Claim 8 wherein
said thermistor is disposed on the first channel, and said heater is disposed at a position that is separated from the thermistor by a distance between the first channel and the thermistor.

12. A biological sample discrimination apparatus as defined Claim 2 or 3 wherein
said discrimination unit includes a fitting pint to be inserted into a fitting pin hole provided on the plate, and a low-speed rotation motor for rotating the discrimination unit at a low speed, and
after the plate is fitted and fixed to the discrimination unit with the fitting pin, the plate as well as the discrimination unit are rotated at a low speed by the low-speed rotation motor, and the biological sample that migrates in the buffer agent is discriminated during the low-speed rotation of the plate.

13. A biological sample discrimination apparatus as defined in Claim 12 wherein
said discrimination unit includes a positioning mark detection sensor for detecting a positioning mark that is provided on the plate, and
said plate is rotated at a low speed by the low-speed rotation motor, and the fitting pin hole on the plate is detected by the positioning mark detection sensor to determine the position of the plate, and thereafter, the fitting pin is inserted in the fitting pin hole.

14. A biological sample discrimination apparatus as defined in Claim 2 or 3 wherein
said discrimination unit is provided with a positive electrode and a negative electrode, and
after the filling unit separates the biological sample in the second channel so that a predetermined amount of the biological sample remains in the quantification part of the second channel, the positive electrode and the negative electrode are inserted in the first channel, and a voltage is applied between the positive electrode and the negative electrode to make the predetermined amount of the biological sample stored in the quantification part migrate by electrophoresis in the buffer agent, whereby the biological sample that migrates in the buffer agent is discriminated.

15. A biological sample discrimination apparatus as defined in Claim 14 wherein
said plate is provided with a cleaning region for cleaning the positive electrode and the negative electrode, and
after the filling unit separates the biological sample in the second channel so that a predetermined amount of the biological sample remains in the quantification part of the second channel, the positive electrode and the negative electrode are cleaned in the cleaning region, and then the positive electrode and the negative electrode are inserted into the first channel.

16. A biological sample discrimination apparatus as defined in Claim 14 wherein
said discrimination unit includes, instead of the positive electrode and the negative electrode, two electrode contact pins for applying a voltage to a positive electrode and a negative electrode which are provided on the plate.

17. A biological sample discrimination apparatus as defined in Claim 14 wherein
said biological sample is a DNA sample, and
said buffer agent contains a DNA conjugate for separation comprising a linear polymer to which a base sequence that is hydrogen-bondable to a target DNA as a detection target included in the DNA sample is bonded, a DNA bonding control agent, and a pH buffer agent.

18. A biological sample discrimination apparatus as defined in Claim 1 further including:
a cooling fan for cooling the increased temperature in the apparatus, and
a light cutoff part for cutting off light incident from the outside of the apparatus, which is disposed on an air intake port of the cooling fan.

19. A biological sample discrimination apparatus as defined in Claim 18 wherein
said light cutoff part comprises a porous film.

20. A biological sample discrimination apparatus as defined in Claim 18 wherein
said light cutoff part comprises an L-shaped or crank-shaped baffle plate.

21. A biological sample discrimination apparatus as defined in Claim 2 or 3 wherein
said discrimination unit includes an optical detector for detecting a fluorescence or an absorbance of the buffer agent that is filled in the first channel, and
discriminates the biological sample that migrates in the buffer agent, on the basis of a result of the detection by the optical detection unit.

22. A biological sample discrimination apparatus as defined in Claim 21 wherein
said optical detection unit is disposed on an elevation stage for vertically moving the plate, and
a height adjustment unit for measuring a distance between the plate and the elevation stage and performing adjustment so as to make the measurement result constant is disposed on the elevation stage.

23. A biological sample discrimination method for detecting a biological sample that migrates in a buffer agent to discriminate the biological sample, comprising:
using a plate on which a channel pattern is formed, said channel pattern including a first channel into which the buffer agent is injected, and a second channel having, in a portion thereof, a quantification part that has a portion common to the first channel, and holds a predetermined amount of a biological sample, said biological sample being injected into the channel including the quantification part;
filling the buffer agent in the first channel;
filling the biological sample in the second channel including the quantification part;
leaving a predetermined amount of the biological sample in the quantification part of the second channel, and adding the predetermined amount of the biological sample to the buffer agent; and
making the predetermined amount of the biological sample migrate in the buffer agent to discriminate the biological sample that migrates in the buffer agent.

24. A biological sample discrimination method as defined in Claim 23 comprising:
rotating, at a high speed, a plate on which a channel pattern is formed, said channel pattern including the first channel into which the buffer agent is injected, the second channel including the quantification part into which the biological sample is injected, and an air hole that is connected to a sample injection part for injecting the biological sample, thereby to make the buffer agent flow into the first channel by a centrifugal force to fill the first channel, and simultaneously, make the biological sample flow up to a first flow position that does not reach the quantification part in the second channel;
pressurizing the sample injection part of the second channel to make the biological sample in the second channel flow from a first flow position to a second flow position including the quantification part in the second channel;
rotating the plate at a high speed to separate the biological sample in the second channel so that a predetermined amount of the biological sample remains in the quantification part of the second channel by a centrifugal force;
setting the first channel at a constant temperature; and
making the predetermined amount of the biological sample stored in the quantification part migrate in the buffer agent to discriminate the biological sample that migrates in the buffer agent.

25. A biological sample discrimination method as defined in Claim 23 comprising:
rotating, at a high speed, a plate on which a channel pattern is formed, said channel pattern including the first channel into which the buffer agent is injected, the second channel including the quantification part into which the biological sample is injected, and an air hole that is connected to a sample injection part for injecting the biological sample, thereby to make the buffer agent flow into the first channel by a centrifugal force to fill the first channel, and simultaneously, make the biological sample flow up to a first flow position that does not reach the quantification part in the second channel;
pressurizing the sample injection part of the second channel to make the biological sample in the second channel flow from a first flow position to a second flow position including the quantification part in the second channel;
performing aspiration from the air hole of the second channel to separate the biological sample in the second channel so that a predetermined amount of the biological sample remains in the quantification part of the second channel;
setting the first channel at a constant temperature; and
making the predetermined amount of the biological sample stored in the quantification part migrate in the buffer agent to discriminate the biological sample that migrates in the buffer agent.

26. A plate for performing discrimination of a biological sample, having a channel pattern comprising:
a buffer agent injection part for injecting a buffer agent that reacts with the biological sample into the plate;
a first channel connected to the buffer agent injection part;
a sample injection part for injecting the biological sample into the plate; and
a second channel connected to the sample injection part; and
said second channel including, in a portion thereof, a quantification part for holding a predetermined amount of the biological sample to be supplied to the first channel, and the first channel and the second channel being connected through the quantification part.

27. A biological sample discrimination plate as defined in Claim 26 wherein
said first channel and said second channel contact parallel to each other via the quantification part.

28. A biological sample discrimination plate as defined in Claim 26 wherein
first and second electrode insertion parts into which positive and negative electrode parts or a positive electrode and a negative electrode are inserted are provided in the first channel.

29. A biological sample discrimination plate as defined in Claim 26 wherein
said buffer agent injection parts are provided at the both ends of the first channel, and an air hole connected to the sample injection part is provided in the second channel.

30. A biological sample discrimination plate as defined in Claim 26 wherein
after the buffer agent is injected into the buffer agent injection part and the biological sample is injected into the sample injection part;
in a first step, the buffer agent injected from the buffer agent injection part is filled in the first channel;
in a second step, the biological sample injected from the sample injection part is filled in the second channel including the quantification part;
in a third step, the biological sample in the second channel is separated to make a predetermined amount of the biological sample remain in the quantification part; and
in a fourth step, the remaining predetermined amount of the biological sample migrates in the buffer agent in the first channel.

31. A biological sample discrimination plate as defined in Claim 30 wherein
said first step is filling the buffer agent into the first channel by pressurization, aspiration, or capillary phenomenon.

32. A biological sample discrimination plate as defined in Claim 30 wherein
said second step of filling the biological sample into the second channel including the quantification part by pressurization, aspiration, or capillary phenomenon.

33. A biological sample discrimination plate for detecting a biological sample that migrates in a buffer agent to discriminate the biological sample, said plate having a channel pattern comprising:
a first channel having a portion in which the buffer agent is injected, said first channel being filled with the buffer agent when the plate is rotated at a high speed; and
a second channel including, in a portion thereof, a quantification part that has a portion common to the first channel, and holds a predetermined amount of the biological sample, said biological sample being flowed up to a first flow position that does not reach the quantification part when the plate is rotated at a high speed, and said biological sample stored in the second channel being flowed from the first flow position to a second flow position including the quantification part when the plate is pressurized.

34. A biological sample discrimination plate as defined in Claim 33 wherein
first and second electrode insertion parts into which a negative electrode and a positive electrode are inserted are provided in a portion of the first channel.

35. A biological sample discrimination plate as defined in Claim 33 wherein
said first channel comprises a channel having a round shape comprising an inner circumference channel positioned on an inner circumference side of an arc-shaped channel that extends in a circumference direction of a circle the center of which corresponds to the center of the biological sample discrimination plate, an outer circumference channel positioned on an outer circumference side thereof, and a radiation channel that extends in a radiation direction from the center of the circle, said radiation channel connecting both ends of the inner circumference channel and the outer circumference channel;
said second channel comprises the arc-shaped channel positioned between the inner circumference channel and the outer circumference channel, and a U-shaped channel provided in a portion of the arc-shaped channel; and
said quantification part comprises a portion of the outer circumference channel, and a portion of the U-shaped channel in the second channel, which portions contact in parallel to each other.

36. A biological sample discrimination plate as defined in Claim 35 wherein
said buffer agent injection part in which the buffer agent is injected, which is connected to the first channel, is positioned on the inner circumference side of the first channel.

37. A biological sample discrimination plate as defined in Claim 35 wherein
said sample injection part in which the biological sample is injected, which is connected to the second channel, is positioned on the inner circumference side of the second channel.

38. A biological sample discrimination plate as defined in Claim 34 wherein
said first and second electrode insertion parts are provided in a portion of the radiation channel of the first channel.

39. A biological sample discrimination plate as defined in Claim 35 wherein
a buffer agent injection part for injecting the buffer agent is provided approximately in the center of the inner circumference channel of the first channel.

40. A biological sample discrimination plate as defined in Claim 35 wherein
when the buffer agent is filled in the first channel, the buffer agent is filled in the outer circumference channel and the first and second electrode insertion parts, in the first channel.

41. A biological sample discrimination plate as defined in Claim 35 wherein
the arc-shaped channel in the inner circumference channel is positioned on an ellipse arc in which the channel slightly deviates to the outer circumference channel side from the circular arc.

42. A biological sample discrimination plate as defined in Claim 35 wherein
the channel width of the inner circumference channel is wider than the channel width of the outer circumference channel.

43. A biological sample discrimination plate as defined in Claim 35 wherein
said outer circumference channel has a channel length adjustment part for adjusting a difference between the length of a channel from the first electrode insertion part and the quantification part, and the length of a channel from the second electrode insertion part to the quantification part.

44. A biological sample discrimination plate as defined in Claim 35 wherein
a sample injection part for injecting the biological sample is provided at an end of the second channel, and a sample pool for holding the biological sample injected from the sample injection part when the biological sample is filled in the second channel is provided at the other end of the second channel.

45. A biological sample discrimination plate as defined in Claim 28 or 34 wherein
a heater for heating the first channel and a thermistor for measuring the temperature of the first channel are provided above the first channel, and
a positive electrode and a negative electrode are provided in the first and second electrode insertion parts, respectively.

46. A biological sample discrimination plate as defined in Claim 28 or 34 wherein
said first and second electrode insertion parts have air holes.

47. A biological sample discrimination plate as defined in Claim 44 wherein
said sample pool has an air hole.

48. A biological sample discrimination plate as defined in Claim 26 or 33 wherein
said biological sample is a DNA sample, and
said buffer agent contains a DNA conjugate for separation comprising a linear polymer to which a base sequence that is hydrogen-bondable to a target DNA as a detection target included in the DNA sample is bonded, a DNA bonding control agent, and a pH buffer agent.

49. A biological sample discrimination plate as defined in Claim 28 or 34 wherein
electrode insertion ports into which the positive electrode and the negative electrode are inserted are provided at the first and second electrode insertion parts, and
cover films are put on the electrode insertion parts.

50. A biological sample discrimination plate as defined in Claim 26 or 33 wherein
a plurality of the channel patterns are formed on said biological sample discrimination plate.

51. A biological sample discrimination plate as defined in Claim 28 or 34 wherein
a cleaning region for cleaning the positive electrode and the negative electrode are provided on the biological sample discrimination plate, and
the positive electrode and the negative electrode are cleaned in the cleaning region, and thereafter, the positive electrode and the negative electrode are inserted in the first channel.

52. A biological sample discrimination plate as defined in Claim 28 or 34 wherein
said buffer agent injection parts are provided at both ends of the first channel, and said buffer agent injection parts are used also as the electrode parts or the electrode insertion parts.

53. A biological sample discrimination plate as defined in Claim 26 or 33 wherein
said first channel and said second channel are formed by grooves that are formed on the plate surface, and a film that covers the plate surface.

54. A biological sample discrimination plate as defined in Claim 26 or 33 wherein
said first channel and said second channel are formed on the same surface of the plate.

55. A biological sample discrimination plate as defined in Claim 26 or 33 wherein
said first channel and said second channel are formed on different surfaces of the plate.
